# EUROPEAN PATENT APPLICATION

(11) **EP 4 694 435 A1**
(43) Date of publication of application: **11.02.2026**
(21) Application number: 23929074.5
(22) Date of filing: 24.03.2023
(51) Int. Cl.: H04W 72/04

(54) **CONFIGURATION METHOD FOR REFERENCE SIGNAL AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Gunzelmann, Rainer
(86) International application number: PCT/CN2023/083816
(87) International publication number: WO 2024/197471

(57) **Abstract**

Disclosed in embodiments of the present disclosure are a configuration method for a reference signal and an apparatus, which can be applied to the technical field of communication. The method, executed by a terminal, comprises: sending and/or receiving parameter information of a reference signal, wherein the parameter information comprises a frequency domain resource corresponding to the reference signal, and the frequency domain resource comprises at least one CC or at least one PFL. Therefore, the terminal can transmit, on the basis of the at least one CC or the at least one PFL, a request and/or configuration of the reference signal under carrier aggregation. That is, a method for sending the request of the reference signal and/or receiving the configuration of the reference signal under carrier aggregation is provided, improving the positioning precision of positioning reference signal transmission based on carrier aggregation.

## Description

### FIELD

The present disclosure relates to the field of communication technologies, and in particular, to a method for configuring reference signal and apparatus.

### BACKGROUND

In Release 18 (Rel-18), to improve the accuracy of time-based positioning methods, a method using carrier aggregation (CA) (also called bandwidth aggregation) to transmit reference signals, such as a positioning reference signal (PRS) or a sounding reference signal (SRS), is considered. There is no good method for requesting and/or configuring reference signals transmitted by a terminal based on a component carrier (CC) or a positioning frequency layer (PFL) when the terminal is in carrier aggregation.

### SUMMARY

Embodiments of the present disclosure provide a method for configuring reference signal and apparatus, which can implement a request and/or configuration for a terminal to transmit a reference signal based on at least one CC or at least one PFL when in carrier aggregation, provide a method for requesting to send a reference signal and/or receiving a configuration of a reference signal when in carrier aggregation, and improve positioning accuracy based on carrier-aggregated positioning reference signal transmission.

According to a first aspect, an embodiment of the present disclosure provides a method for configuring reference signal, performed by a terminal, the method including: sending and/or receiving parameter information of a reference signal, where the parameter information includes a frequency-domain resource corresponding to the reference signal, and the frequency-domain resource includes at least one component carrier (CC) or at least one positioning frequency layer (PFL).

In the present disclosure, the terminal sends and/or receives parameter information of a reference signal, where the parameter information includes a frequency-domain resource corresponding to the reference signal, and the frequency-domain resource includes at least one CC or at least one PFL. Thus, a request and/or configuration for a terminal to transmit a reference signal based on at least one CC or at least one PFL when in carrier aggregation can be implemented, a method for requesting to send a reference signal and/or receiving a configuration of a reference signal when in carrier aggregation can be provided, and positioning accuracy based on carrier-aggregated positioning reference signal transmission can be improved.

According to a second aspect, an embodiment of the present disclosure provides another method for configuring reference signal, performed by a network-side device, the method including: receiving a request message sent by a terminal; and/or sending configuration information to the terminal; where the request message and/or the configuration information include parameter information of a reference signal, the parameter information includes a frequency-domain resource corresponding to the reference signal, and the frequency-domain resource includes at least one CC or at least one PFL.

According to a third aspect, an embodiment of the present disclosure provides a communication apparatus, where the communication apparatus has some or all functions of the terminal in the method described in the first aspect, for example, the functions of the communication apparatus may include some or all functions in the embodiments of the present disclosure, or may include the function of implementing any one embodiment of the present disclosure separately. The functions may be implemented by hardware, or by hardware executing corresponding software. The hardware or software includes one or more units or modules corresponding to the above functions.

In an embodiment, the structure of the communication apparatus may include a transceiver module and a processing module, where the processing module is configured to support the communication apparatus to perform corresponding functions in the above method. The transceiver module is configured to support communication between the communication apparatus and other devices. The communication apparatus may further include a storage module, where the storage module is coupled to the transceiver module and the processing module, and stores necessary computer programs and data for the communication apparatus.

In an embodiment, the communication apparatus includes: a transceiver module, configured to send and/or receive parameter information of a reference signal, where the parameter information includes a frequency-domain resource corresponding to the reference signal, and the frequency-domain resource includes at least one component carrier CC or at least one positioning frequency layer PFL.

According to a fourth aspect, an embodiment of the present disclosure provides another communication apparatus, where the communication apparatus has some or all functions of the network-side device in the method example described in the second aspect, for example, the functions of the communication apparatus may include some or all functions in the embodiments of the present disclosure, or may include the function of implementing any one embodiment of the present disclosure separately. The functions may be implemented by hardware, or by hardware executing corresponding software. The hardware or software includes one or more units or modules corresponding to the above functions.

In an embodiment, the structure of the communication apparatus may include a transceiver module and a processing module, where the processing module is configured to support the communication apparatus to perform corresponding functions in the above method. The transceiver module is configured to support communication between the communication apparatus and other devices. The communication apparatus may further include a storage module, where the storage module is coupled to the transceiver module and the processing module, and stores necessary computer programs and data for the communication apparatus.

In an embodiment, the communication apparatus includes: a transceiver module, configured to receive a request message sent by a terminal; and/or send configuration information to the terminal; where the request message and/or the configuration information include parameter information of a reference signal, the parameter information includes a frequency-domain resource corresponding to the reference signal, and the frequency-domain resource includes at least one CC or at least one PFL.

According to a fifth aspect, an embodiment of the present disclosure provides a communication apparatus, including a processor, where when the processor invokes a computer program in a memory, the method described in the first aspect is executed.

According to a sixth aspect, an embodiment of the present disclosure provides a communication apparatus, including a processor, where when the processor invokes a computer program in a memory, the method described in the second aspect is executed.

According to a seventh aspect, an embodiment of the present disclosure provides a communication apparatus, including a processor and a memory, where the memory stores a computer program; the processor executes the computer program stored in the memory to cause the communication apparatus to perform the method described in the first aspect.

According to an eighth aspect, an embodiment of the present disclosure provides a communication apparatus, including a processor and a memory, where the memory stores a computer program; the processor executes the computer program stored in the memory to cause the communication apparatus to perform the method described in the second aspect.

According to a ninth aspect, an embodiment of the present disclosure provides a communication apparatus, including a processor and an interface circuit, where the interface circuit is configured to receive a code instruction and transmit it to the processor, and the processor is configured to run the code instruction to cause the apparatus to perform the method described in the first aspect.

According to a tenth aspect, an embodiment of the present disclosure provides a communication apparatus, including a processor and an interface circuit, where the interface circuit is configured to receive a code instruction and transmit it to the processor, and the processor is configured to run the code instruction to cause the apparatus to perform the method described in the second aspect.

According to an eleventh aspect, an embodiment of the present disclosure provides a reference signal configuration system, including the communication apparatus according to the third aspect and the communication apparatus according to the fourth aspect, or including the communication apparatus according to the fifth aspect and the communication apparatus according to the sixth aspect, or including the communication apparatus according to the seventh aspect and the communication apparatus according to the eighth aspect, or including the communication apparatus according to the ninth aspect and the communication apparatus according to the tenth aspect.

According to a twelfth aspect, an embodiment of the present invention provides a computer-readable storage medium for storing instructions used by the terminal, where when the instructions are executed, the terminal is caused to perform the method described in the first aspect.

According to a thirteenth aspect, an embodiment of the present invention provides a readable storage medium for storing instructions used by the network-side device, where when the instructions are executed, the network-side device is caused to perform the method described in the second aspect.

According to a fourteenth aspect, the present disclosure further provides a computer program product including a computer program, where when run on a computer, the computer program causes the computer to execute the method described in the first aspect.

According to a fifteenth aspect, the present disclosure further provides a computer program product including a computer program, where when run on a computer, the computer program causes the computer to execute the method described in the second aspect.

According to a sixteenth aspect, the present disclosure provides a chip system, where the chip system includes at least one processor and an interface, configured to support a terminal to implement functions related to the first aspect, for example, determine or process at least one of data and information involved in the above method. In a possible design, the chip system further includes a memory, where the memory is configured to store necessary computer programs and data for the terminal. The chip system may be composed of chips, or may include chips and other discrete devices.

According to a seventeenth aspect, the present disclosure provides a chip system, where the chip system includes at least one processor and an interface, configured to support a network-side device to implement functions related to the second aspect, for example, determine or process at least one of data and information involved in the above method. In a possible design, the chip system further includes a memory, where the memory is configured to store necessary computer programs and data for the network-side device. The chip system may be composed of chips, or may include chips and other discrete devices.

According to an eighteenth aspect, the present disclosure provides a computer program, where when run on a computer, the computer program causes the computer to execute the method described in the first aspect.

According to a nineteenth aspect, the present disclosure provides a computer program, where when run on a computer, the computer program causes the computer to execute the method described in the second aspect.

### BRIEF DESCRIPTION OF THE DRAWINGS

To describe the technical solutions in the embodiments of the present disclosure or in the background art more clearly, the following briefly describes the accompanying drawings required for describing the embodiments or the background art.
FIG. 1 is an architectural diagram of a communication system according to an embodiment of the present disclosure;
FIG. 2 is a flowchart of a method for configuring reference signal according to an embodiment of the present disclosure;
FIG. 3 is a flowchart of another method for configuring reference signal according to an embodiment of the present disclosure;
FIG. 4 is a flowchart of yet another method for configuring reference signal according to an embodiment of the present disclosure;
FIG. 5 is a flowchart of yet another method for configuring reference signal according to an embodiment of the present disclosure;
FIG. 6 is a flowchart of yet another method for configuring reference signal according to an embodiment of the present disclosure;
FIG. 7 is a flowchart of yet another method for configuring reference signal according to an embodiment of the present disclosure;
FIG. 8 is a flowchart of yet another method for configuring reference signal according to an embodiment of the present disclosure;
FIG. 9 is a flowchart of yet another method for configuring reference signal according to an embodiment of the present disclosure;
FIG. 10 is a structural diagram of a communication apparatus according to an embodiment of the present disclosure;
FIG. 11 is a structural diagram of another communication apparatus according to an embodiment of the present disclosure; and
FIG. 12 is a schematic structural diagram of a chip according to an embodiment of the present disclosure.

### DETAILED DESCRIPTION

To better understand the method for configuring reference signal and apparatus disclosed in the embodiments of the present disclosure, the communication system applicable to the embodiments of the present disclosure is first described below.

The embodiments of the present disclosure are described in detail below, examples of which are shown in the accompanying drawings, where the same or similar reference numerals throughout denote the same or similar elements or elements having the same or similar functions. The embodiments described below with reference to the accompanying drawings are exemplary and are intended to explain the present disclosure and should not be construed as limiting the present disclosure. In the description of the present disclosure, unless otherwise specified, "/" means or, for example, A/B can mean A or B; "and/or" herein is merely an association relationship describing associated objects, indicating that three relationships may exist, for example, A and/or B may indicate: A exists alone, both A and B exist, and B exists alone.

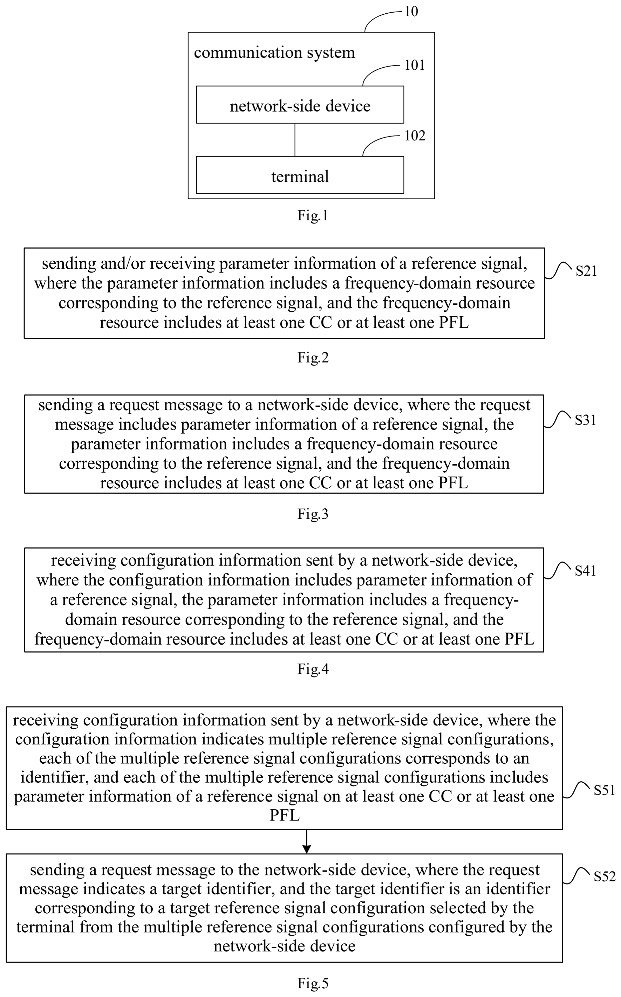

Please refer to FIG. 1, which is a schematic architectural diagram of a communication system according to an embodiment of the present disclosure. The communication system may include, but is not limited to, one network-side device and one terminal. The number and form of devices shown in FIG. 1 are only for example and do not constitute a limitation to the embodiments of the present disclosure. In practice, two or more network-side devices and two or more terminals may be included. The communication system 10 shown in FIG. 1 includes one network-side device 101 and one terminal 102 as an example.

It should be noted that the technical solutions of the embodiments of the present disclosure can be applied to various communication systems. For example: a Long Term Evolution (LTE) system, a fifth generation (5G) mobile communication system, a 5G new radio (NR) system, or other future new mobile communication systems, etc.

The network-side device 101 in the embodiments of the present disclosure may be an entity on the network side for transmitting or receiving signals. For example, the network-side device 101 may be an access network device, including an evolved NodeB (eNB), a transmission reception point (TRP), a next generation NodeB (gNB) in an NR system, a base station in other future mobile communication systems, or an access node in a wireless fidelity (WiFi) system, etc. The specific technology and specific device form adopted by the network -side device 101 are not limited in the embodiments of the present disclosure. The network-side device 101 provided by the embodiments of the present disclosure may be composed of a central unit (CU) and a distributed unit (DU), where the CU may also be called a control unit. Using the CU-DU structure, the protocol layers of the network-side device 101, for example, the network-side device 101, can be split, with the functions of some protocol layers placed in the CU for centralized control, and the functions of the remaining part or all protocol layers distributed in the DU, which is centrally controlled by the CU. The network-side device 101 may also be a core network device. In some embodiments, the core network device may be a network element including a Location Management Function (LMF). Optionally, the LMF network element includes a location server. The location server may be implemented as any one of the following: a Location Management Function (LMF) network element, an Enhanced Serving Mobile Location Centre (E-SMLC), a Secure User Plane Location (SUPL), or a SUPL Location Platform (SUPL LP).

The terminal 102 in the embodiments of the present disclosure is an entity on the user side for receiving or transmitting signals, such as a mobile phone. The terminal may also be called user equipment (LTE), a terminal, a mobile station (MS), a mobile terminal (MT), etc. The terminal may be a car with communication function, a smart car, a mobile phone, a wearable device, a tablet (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The specific technology and specific device form adopted by the terminal are not limited in the embodiments of the present disclosure.

It is understandable that the communication system described in the embodiments of the present disclosure is to illustrate the technical solutions of the embodiments of the present disclosure more clearly, and does not constitute a limitation to the technical solutions provided by the embodiments of the present disclosure. Those of ordinary skill in the art may know that as the system architecture evolves and new service scenarios emerge, the technical solutions provided by the embodiments of the present disclosure are equally applicable to similar technical problems.

In addition, to facilitate understanding of the embodiments of the present disclosure, the following points are explained.

Firstly, in the embodiments of the present disclosure, "used to indicate" may include being used for direct indication and being used for indirect indication. When describing that certain information indicates A, it may include that the information carries A, or may also include that the information directly indicates A or indirectly indicates A, and does not necessarily mean that the information definitely carries A.

The information indicated by the information is called to-be-indicated information. In specific implementation, there are many ways to indicate the to-be-indicated information. For example, but not limited to, the to-be-indicated information can be directly indicated, such as the to-be-indicated information itself or an index of the to-be-indicated information. The to-be-indicated information can also be indirectly indicated by indicating other information, where there is an association relationship between the other information and the to-be-indicated information. It is also possible to indicate only a part of the to-be-indicated information, while other parts of the to-be-indicated information are known or agreed in advance. For example, the indication of specific information can also be implemented by using the pre-agreed (e.g., protocol-defined) arrangement order of various pieces of information, thereby reducing indication overhead to some extent.

The to-be-indicated information can be sent as a whole, or can be divided into multiple pieces of sub-information and sent separately. Moreover, the transmission period and/or transmission timing of these sub-information may be the same or different. The specific transmission method is not limited in the present disclosure. The transmission period and/or transmission timing of these sub-information may be predefined, for example, predefined according to a protocol.

Secondly, in the present disclosure, terms like "first", "second", and various numerical labels (e.g., "#1", "#2") are only used for distinction for convenience of description and are not intended to limit the scope of the embodiments of the present disclosure. For example, distinguishing different information, etc.

The embodiments of the present disclosure list multiple implementation manners to clearly illustrate the technical solutions of the embodiments of the present disclosure. Of course, those skilled in the art can understand that the multiple embodiments provided in the embodiments of the present disclosure can be executed separately, or can be executed in combination with the methods in other embodiments of the present disclosure, or can be executed in combination with some methods in other related technologies; the embodiments of the present disclosure do not limit this.

In Release 18 (Rel-18), to improve the accuracy of time-based positioning methods, a method using carrier aggregation (CA) (also called bandwidth aggregation) to transmit reference signals, such as a positioning reference signal (PRS) or a sounding reference signal (SRS), is considered. There is still a lack of methods for requesting and/or configuring reference signals transmitted by a terminal based on a component carrier (CC) or a positioning frequency layer (PFL) when the terminal is in carrier aggregation.

Based on this, an embodiment of the present disclosure provides a method for configuring reference signal. A terminal sends and/or receives parameter information of a reference signal, where the parameter information includes a frequency-domain resource corresponding to the reference signal, and the frequency-domain resource includes at least one component carrier CC or at least one positioning frequency layer PFL. Thus, a request and/or configuration for a terminal to transmit a reference signal based on at least one CC or at least one PFL when in carrier aggregation can be implemented, a method for requesting to send a reference signal and/or receiving a configuration of a reference signal when in carrier aggregation can be provided, and positioning accuracy based on carrier-aggregated positioning reference signal transmission can be improved.

The method for configuring reference signal and apparatus provided by the present disclosure are described in detail below with reference to the accompanying drawings.

Please refer to FIG. 2, which is a flowchart of a method for configuring reference signal according to an embodiment of the present disclosure. As shown in FIG. 2, the method is performed by a terminal and may include, but is not limited to, the following steps:

S21: sending and/or receiving parameter information of a reference signal, where the parameter information includes a frequency-domain resource corresponding to the reference signal, and the frequency-domain resource includes at least one CC or at least one PFL.

**In** this embodiment of the present disclosure, the terminal may send parameter information of the reference signal to a network-side device. The network-side device may be a base station or a location management function (LMF) in the core network.

**In** some embodiments, when the terminal sends parameter information of the reference signal to the network-side device, it may send a request message to the network-side device, where the request message includes the parameter information of the reference signal.

**In** an embodiment, when the network-side device is a base station, the terminal sends a request message to the base station. The request message may reuse existing signaling or messages, or may use new signaling or messages. This embodiment of the present disclosure does not impose specific limitations on this.

For example, the request message may be a random access request message, or may be a scheduling request message, or may be a medium access control control element (MAC-CE), etc.

**In** an embodiment, when the network-side device is an LMF, the terminal sends a request message to the LMF, and may use the LTE positioning protocol (LPP) to send the request message to the LMF.

**In** this embodiment of the present disclosure, the terminal may receive parameter information of the reference signal sent by the network-side device. The network-side device may be a base station or an LMF in the core network.

In some embodiments, when the terminal receives parameter information of the reference signal sent by the network-side device, it may receive configuration information sent by the network-side device, where the configuration information includes the parameter information of the reference signal.

In this embodiment of the present disclosure, the parameter information includes a frequency-domain resource corresponding to the reference signal, and the frequency-domain resource includes at least one component carrier (CC) or at least one positioning frequency layer (PFL).

It is understandable that the configuration of the parameter information of the reference signal can be configured based on a single CC. However, if the aggregation attribute corresponding to the frequency-domain resource of the reference signal is aggregation of multiple CCs, and the time-domain transmission positions corresponding to the reference signals on the multiple CCs are the same, that is, the reference signals on these multiple CCs need to be aggregated into one reference signal for transmission. In this case, the reference signals on the multiple CCs will be treated as one reference signal for transmission. That is to say, when configuring the parameter information of the reference signal, a corresponding reference signal resource set and the reference signal resources contained in the reference signal resource set will be configured on each CC. For a terminal that transmits reference signals based on a single CC, the reference signals on each CC are independent. For a terminal that transmits reference signals based on multiple CCs, the reference signals simultaneously transmitted on the multiple CCs that need to be aggregated need to be treated as one reference signal for transmission. Treating them as one reference signal for transmission can be understood as: if it is PRS, the terminal obtains one measurement value for the same measurement quantity (quantity) for the reference signals simultaneously transmitted on multiple CCs, for example, obtains one Reference Signal Time Difference (RSTD) or one Rx-Tx time difference; if it is SRS, the terminal simultaneously sends reference signals on multiple CCs, and the base station or TRP obtains one measurement value for the same measurement quantity (quantity) for the reference signals simultaneously transmitted on multiple CCs, for example, obtains one Relative Time of Arrival (RTOA) or one Rx-Tx time difference.

In some embodiments, the reference signal includes at least one of:
a positioning reference signal (PRS); or
a sounding reference signal (SRS).

In this embodiment of the present disclosure, the reference signal may include PRS. The PRS may include on-demand PRS. On-demand PRS is requested by the terminal and is PRS transmitted only for a period of time. This period of time is indicated by the following two information elements (IEs). Of course, PRS also includes non-on-demand PRS. (The request for on-demand PRS and the configuration of PRS are transmitted between the terminal and the LMF using LPP protocol signaling).
1. dl-prs-start-time specifies the desired start time for the requested downlink (DL)-PRS. It indicates the time in seconds from the time the IE NR-On-Demand-DL-PRS-Request was received.
2. dl-prs-duration specifies the desired duration of the requested DL-PRS. The desired duration is the sum of the seconds, minutes, hours fields. If this field is included, at least one of the seconds, minutes, hours fields shall be present.

In this embodiment of the present disclosure, the reference signal may include SRS. In some embodiments, the SRS may include at least one of periodic SRS, semi-persistent SRS (SP-SRS), or aperiodic SRS (AP-SRS). (The request and configuration of SRS are transmitted between the terminal and the base station (gNB)).

In this embodiment of the present disclosure, the SRS may include at least one of SRS used for positioning and SRS used for Multiple-Input Multiple-Output (MIMO).

It is understandable that to improve the accuracy of time-based positioning methods, a method of carrier aggregation is proposed to send reference signals. Carrier aggregation involves at least one CC or at least one PFL.

Based on this, in this embodiment of the present disclosure, the terminal sends and/or receives parameter information of a reference signal, where the parameter information includes a frequency-domain resource corresponding to the reference signal, and the frequency-domain resource includes at least one CC or at least one PFL. The terminal, when in carrier aggregation, can send a request for a reference signal based on at least one CC or at least one PFL, and/or receive a configuration for a reference signal based on at least one CC or at least one PFL.

In this implementation or embodiment, provided that there is no contradiction, the steps may be independent, arbitrarily combined, or exchanged in order; optional manners or optional examples may be arbitrarily combined and may be arbitrarily combined with other implementations or embodiments.

By implementing the embodiments of the present disclosure, the terminal sends and/or receives parameter information of a reference signal, where the parameter information includes a frequency-domain resource corresponding to the reference signal, and the frequency-domain resource includes at least one CC or at least one PFL. Thus, a request and/or configuration for a terminal to transmit a reference signal based on at least one CC or at least one PFL when in carrier aggregation can be implemented, a method for requesting to send a reference signal and/or receiving a configuration of a reference signal when in carrier aggregation can be provided, and positioning accuracy based on carrier-aggregated positioning reference signal transmission can be improved.

Please refer to FIG. 3, which is a flowchart of another method for configuring reference signal according to an embodiment of the present disclosure. As shown in FIG. 3, the method is performed by a terminal and may include, but is not limited to, the following steps:

S31: sending a request message to a network-side device, where the request message includes parameter information of a reference signal, the parameter information includes a frequency-domain resource corresponding to the reference signal, and the frequency-domain resource includes at least one CC or at least one PFL.

In an embodiment, when the network-side device is a base station, the terminal sends a request message to the base station. The request message may reuse existing signaling or messages, or may use new signaling or messages. This embodiment of the present disclosure does not impose specific limitations on this.

For example, the request message may be a random access request message, or a scheduling request message, or a MAC CE, etc.

In an embodiment, when the network-side device is an LMF, the terminal sends a request message to the LMF, and may use the LPP protocol to send the request message to the LMF.

In this embodiment of the present disclosure, the parameter information includes a frequency-domain resource corresponding to the reference signal, and the frequency-domain resource includes at least one component carrier (CC) or at least one positioning frequency layer (PFL).

It is understandable that the configuration of the parameter information of the reference signal can be configured based on a single CC. However, if the aggregation attribute corresponding to the frequency-domain resource of the reference signal is aggregation of multiple CCs, and the time-domain transmission positions corresponding to the reference signals on the multiple CCs are the same, that is, the reference signals on these multiple CCs need to be aggregated into one reference signal for transmission. In this case, the reference signals on the multiple CCs will be treated as one reference signal for transmission. That is to say, when configuring the parameter information of the reference signal, a corresponding reference signal resource set and the reference signal resources contained in the reference signal resource set will be configured on each CC. For a terminal that transmits reference signals based on a single CC, the reference signals on each CC are independent. For a terminal that transmits reference signals based on multiple CCs, the reference signals simultaneously transmitted on the multiple CCs that need to be aggregated need to be treated as one reference signal for transmission. Treating them as one reference signal for transmission can be understood as: if it is PRS, the terminal obtains one measurement value for the same measurement quantity (quantity) for the reference signals simultaneously transmitted on multiple CCs, for example, obtains one Reference Signal Time Difference (RSTD) or one Rx-Tx time difference; if it is SRS, the terminal simultaneously sends reference signals on multiple CCs, and the base station or TRP obtains one measurement value for the same measurement quantity (quantity) for the reference signals simultaneously transmitted on multiple CCs, for example, obtains one Relative Time of Arrival (RTOA) or one Rx-Tx time difference.

In some embodiments, the request message includes at least one of:
a first request message including a single CC;
a second request message including a single PFL;
a third request message including multiple CCs; or
a fourth request message including multiple PFLs.

In this embodiment of the present disclosure, the request message may be a first request message including a single CC.

In this embodiment of the present disclosure, the request message may be a second request message including a single PFL.

In this embodiment of the present disclosure, the request message may be a third request message including multiple CCs.

In this embodiment of the present disclosure, the request message may be a fourth request message including multiple PFLs.

It should be noted that the above embodiments are not exhaustive but are only illustrative of some embodiments, and the above embodiments may be implemented separately or in combination with multiple embodiments. This embodiment of the present disclosure does not impose specific limitations on this.

In this embodiment of the present disclosure, a request message, i.e., a request, may include at least one of an on-demand PRS request based on a single CC, an on-demand PRS request based on a single PFL, an on-demand PRS request based on multiple CCs, and an on-demand PRS request based on multiple PFLs.

In some embodiments, the third request message indicates multiple CCs supported by the terminal for carrier aggregation; or the fourth request message indicates multiple PFLs supported by the terminal for carrier aggregation.

In this embodiment of the present disclosure, the third request message indicates multiple CCs supported by the terminal for carrier aggregation. It is understandable that the multiple CCs for carrier aggregation are used to send the reference signal. The reference signals sent on different CCs here are all used for positioning, but the corresponding reference signal resource IDs may be the same or different.

For the third request message, it indicates which multiple CCs the terminal itself tends to support for linking to achieve carrier aggregation.

In this embodiment of the present disclosure, the fourth request message indicates multiple PFLs supported by the terminal for carrier aggregation. It is understandable that the multiple PFLs for carrier aggregation are used to send the reference signal. The reference signals sent on different PFLs here are all used for positioning, but the corresponding reference signal resource IDs may be the same or different.

For the fourth request message, it indicates which multiple PFLs the terminal itself tends to support for linking to achieve carrier aggregation.

For example, a link identifier (ID) can be configured for each CC or each PFL respectively. CCs or PFLs corresponding to the same link ID are those that need to be aggregated. In this case, the terminal can simultaneously request one or more sets of CC combinations, and CCs within different combinations need to be aggregated separately; or the terminal can simultaneously request one or more sets of PFL combinations, and PFLs within different combinations need to be aggregated separately.

For example, a CC group IE can be configured, where the CC group includes multiple CC identifiers. Then the CCs in the CC group are those that need to be aggregated. Thus, the terminal can simultaneously request one or more CC groups, and CCs within different CC groups need to be aggregated separately. Or, a PFL group IE can be configured, where the PFL group includes multiple PFL identifiers. Then the PFLs in the PFL group are those that need to be aggregated. Thus, the terminal can simultaneously request one or more PFL groups, and CCs within different PFL groups need to be aggregated separately.

In some embodiments, the request message indicates aggregation attributes corresponding to multiple reference signal resources in a reference signal resource set, where the aggregation attributes corresponding to the multiple reference signal resources are the same, or the aggregation attributes corresponding to the multiple reference signal resources are partially or entirely different.

In this embodiment of the present disclosure, the request message indicates aggregation attributes corresponding to multiple reference signal resources in one reference signal resource set. The request message indicates that the aggregation attributes corresponding to the multiple reference signal resources in one reference signal resource set are all the same. In this case, only one aggregation attribute needs to be configured for the reference signal resource set.

In this embodiment of the present disclosure, the aggregation (or link) attributes corresponding to all reference signal resources in one reference signal resource set (e.g., PRS resource set or SRS resource set) are the same, meaning that all reference signal resources have an aggregation (or link) relationship with corresponding reference signal resources in another reference signal resource set on another CC; or all reference signal resources have no aggregation (or link) relationship with any reference signal resource.

For example, the link attributes corresponding to all PRS resources in a PRS resource set are the same, meaning that all PRS resources have a link relationship with corresponding PRS resources in a PRS resource set on another CC; or all PRS resources have no link relationship with any PRS resource.

For example, the link attributes corresponding to all SRS resources in an SRS resource set are the same, meaning that all SRS resources have a link relationship with corresponding SRS resources in an SRS resource set on another CC; or all SRS resources have no link relationship with any SRS resource.

It is understandable that the aggregation (or link) attribute is the aggregation (or link) relationship with other reference signal resource sets or reference signal resources. If the aggregation (or link) attributes are the same, for example, reference signal resource set #1 has an aggregation (or link) relationship with reference signal resource set #2, it means that the aggregation (or link) attributes of all reference signal resources in reference signal resource set #1 are the same. Then the reference signal resources of reference signal resource set #1 and reference signal resource set #2 can be aggregated.

Specifically, which reference signal resource in reference signal resource set #2 the reference signal resource #1 in reference signal resource set #1 aggregates with can adopt a default rule, such as the same identifier (ID), or the same time position, etc.

In this embodiment of the present disclosure, the request message indicates aggregation attributes corresponding to multiple reference signal resources in one reference signal resource set. The request message indicates that the aggregation attributes corresponding to the multiple reference signal resources in one reference signal resource set are partially or entirely different. In this case, aggregation attributes need to be configured separately for each reference signal resource in the reference signal resource set.

In this embodiment of the present disclosure, the aggregation attributes corresponding to all reference signal resources in one reference signal resource set (e.g., PRS resource set or SRS resource set) are different, meaning that some reference signal resources have an aggregation relationship with their corresponding reference signal resources, some reference signal resources have no aggregation relationship with any reference signal resource; or some reference signal resources have an aggregation relationship with corresponding reference signal resources in one reference signal resource set, and some reference signal resources have an aggregation relationship with corresponding reference signal resources in another reference signal resource set.

For example, the link attributes corresponding to all PRS resources in a PRS resource set are different, meaning that some PRS resources have a link relationship with their corresponding PRS resources, some PRS resources have no link relationship with any PRS resource; or some PRS resources have a link relationship with corresponding PRS resources in one PRS resource set, and some PRS resources have a link relationship with corresponding PRS resources in another PRS resource set.

For example, the link attributes corresponding to all SRS resources in an SRS resource set are different, meaning that some SRS resources have a link relationship with their corresponding SRS resources, some SRS resources have no link relationship with any SRS resource; or some SRS resources have a link relationship with corresponding SRS resources in one SRS resource set, and some SRS resources have a link relationship with corresponding SRS resources in another SRS resource set.

The request including PRS is sent by the terminal to the LMF; while the request including SRS may be sent by the terminal to the LMF or the access network device.

It is understandable that the aggregation (or link) attribute refers to the aggregation (or link) relationship with other reference signal resource sets or reference signal resources. Different aggregation attributes of reference signal resources within reference signal resource set #1 mean that, for example, reference signal resource #1 of reference signal resource set #1 has an aggregation relationship with reference signal resource #1 of reference signal resource set #2 and can be aggregated; whereas reference signal resource #2 of reference signal resource set #1 has no aggregation relationship with any other reference signal resource, or reference signal resource #2 of reference signal resource set #1 has an aggregation relationship with reference signal resource #2 of reference signal resource set #3. Therefore, this needs to be configured for each reference signal resource. It does not mean that those with the same aggregation attribute can be aggregated.

In some embodiments, the request message indicates aggregation attributes corresponding to multiple transmission reception points (TRPs), where the aggregation attributes corresponding to the multiple TRPs are all the same, or the aggregation attributes corresponding to the multiple TRPs are partially or entirely different.

In embodiments of the present disclosure, the request message indicates aggregation attributes corresponding to multiple transmission reception points (TRPs).

The request message indicates that the aggregation attributes corresponding to the multiple TRPs are all the same. In this case, the request message can be used to instruct all TRPs of the network-side device to transmit PRS on the same multiple CCs, or transmit SRS on the same multiple CCs, or transmit PRS on the same multiple PFLs, or transmit SRS on the same multiple PFLs.

The request message indicates that the aggregation attributes corresponding to the multiple TRPs are partially or entirely different. In this case, the request message can be used to instruct some or all TRPs of the network-side device to respectively transmit PRS on different multiple CCs, or respectively transmit SRS on different multiple CCs, or respectively transmit PRS on different multiple PFLs, or respectively transmit SRS on different multiple PFLs.

For example, the request message indicates that the aggregation (link) attributes corresponding to all TRPs are the same, meaning all TRPs transmit PRS based on the same multiple CCs, or transmit SRS based on the same multiple CCs, or transmit PRS based on the same multiple PFLs, or transmit SRS based on the same multiple PFLs.

For example, the request message indicates that the link attributes corresponding to all TRPs are partially or entirely different, meaning some TRPs transmit PRS based on these multiple CCs, or transmit SRS based on these multiple CCs, or transmit PRS based on these multiple PFLs, or transmit SRS based on these multiple PFLs; some TRPs transmit PRS based on other multiple CCs, or transmit SRS based on other multiple CCs, or transmit PRS based on other multiple PFLs, or transmit SRS based on other multiple PFLs; or some TRPs transmit PRS based on a single CC, or transmit SRS based on a single CC, or transmit PRS based on a single PFL, or transmit SRS based on a single PFL.

In some embodiments, the indication method for the request message can, within the parameters of each TRP, if the TRP supports aggregation, provide an aggregation identifier corresponding to each TRP, or a TRP group identifier, or a CC group identifier, or a PFL group identifier; otherwise, this field is empty, or is an aggregation identifier or group identifier that defaults to not supporting aggregation.

In embodiments of the present disclosure, the parameters for each TRP include the following content:

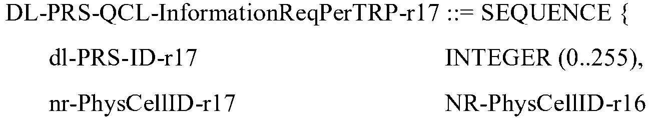

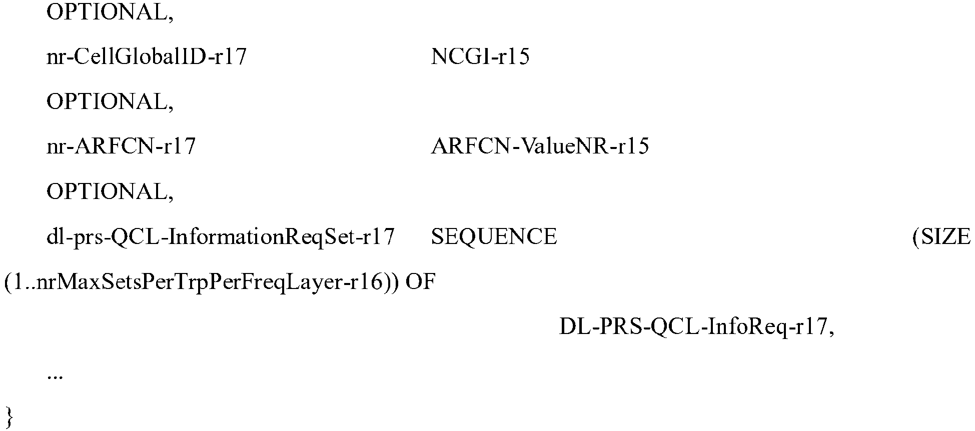

In some embodiments, the request message indicates a target identifier, where the target identifier is an identifier corresponding to a target reference signal configuration selected by the terminal from multiple reference signal configurations configured by the network-side device.

In embodiments of the present disclosure, the request message indicates a target identifier, where the target identifier is an identifier corresponding to a target reference signal configuration selected by the terminal from multiple reference signal configurations configured by the network-side device, and different reference signal configurations correspond to different identifiers.

For example, the request message from the terminal can include an identifier (ID) corresponding to a reference signal (e.g., on-demand PRS/PRS/SRS), where the ID corresponding to on-demand PRS can be dl-prs-configuration-id. The reference signal configuration corresponding to the ID is configured by the LMF, and the terminal only needs to provide the target identifier (i.e., the ID value corresponding to one of the reference signal configurations) when making a request.
a) In this case, it is equivalent to the LMF providing multiple reference signal configurations, each corresponding to one ID.
b) The reference signal configuration corresponding to the ID value can be transmission based on a single CC/single PFL, or can be aggregated transmission based on multiple CCs/multiple PFLs.

It should be noted that relevant descriptions of the reference signal can be found in the related descriptions in the above embodiments and will not be repeated here.

It should be noted that, in embodiments of the present disclosure, S31 can be implemented alone or in combination with any other step in the embodiments of the present disclosure, such as in combination with S21 of the embodiments of the present disclosure. The embodiments of the present disclosure do not impose limitations on this.

In this embodiment or implementation, provided there is no contradiction, the steps can be independent, arbitrarily combined, or their order exchanged; optional methods or examples can be arbitrarily combined and can also be arbitrarily combined with other embodiments or implementations.

By implementing the embodiments of the present disclosure, the terminal sends a request message to the network-side device, where the request message includes parameter information of a reference signal, the parameter information includes a frequency-domain resource corresponding to the reference signal, and the frequency-domain resource includes at least one CC or at least one PFL. Thereby, it is possible to realize a request from the terminal, when in carrier aggregation, for transmitting a reference signal based on at least one CC or at least one PFL, provide a method for requesting to send a reference signal under carrier aggregation, and improve the positioning accuracy of positioning reference signal transmission based on carrier aggregation.

Please refer to FIG. 4, which is a flowchart of yet another method for configuring a reference signal according to an embodiment of the present disclosure. As shown in FIG. 4, the method is performed by a terminal and may include, but is not limited to, the following steps:

S41: receiving configuration information sent by a network-side device, where the configuration information includes parameter information of a reference signal, the parameter information includes a frequency-domain resource corresponding to the reference signal, and the frequency-domain resource includes at least one component carrier (CC) or at least one positioning frequency layer (PFL).

In an embodiment, where the network-side device is a base station, the terminal receives configuration information sent by the network-side device. The configuration information may reuse existing signaling or messages, for example, at least one of Radio Resource Control (RRC) signaling, MAC CE, Downlink Control Information (DCI), or may also use new signaling or messages. The embodiments of the present disclosure do not impose specific limitations on this.

In an embodiment, where the network-side device is an LMF, the terminal receives configuration information sent by the network-side device, and may use the LPP protocol to receive the configuration information sent by the LMF.

In embodiments of the present disclosure, the configuration information includes parameter information of a reference signal, and the configuration information is used to configure the parameter information of the reference signal for the terminal.

The parameter information of the reference signal can be configured directly to the terminal, for example, a non-preconfigured on-demand configuration; if it is a preconfigured on-demand configuration, multiple sets of reference signal configurations (configurations of the parameter information of the reference signal) can be configured for the terminal, each corresponding to an ID, and the terminal only needs to indicate the ID when sending the request message.

In embodiments of the present disclosure, the parameter information includes a frequency-domain resource corresponding to the reference signal, and the frequency-domain resource includes at least one component carrier (CC) or at least one positioning frequency layer (PFL).

It is understandable that the configuration of the parameter information of the reference signal can be based on a single CC. However, if the aggregation attribute corresponding to the frequency-domain resource of the reference signal is aggregation of multiple CCs, and the time-domain transmission positions corresponding to the reference signals on the multiple CCs are the same, meaning the reference signals on these multiple CCs need to be aggregated into one reference signal for transmission. In this case, the reference signals on the multiple CCs will be treated as one reference signal for transmission. That is, when configuring the parameter information of the reference signal, a corresponding reference signal resource set and the reference signal resources contained in the reference signal resource set will be configured on each CC. For terminals transmitting reference signals based on a single CC, the reference signals on each CC are independent. For terminals transmitting reference signals based on multiple CCs, the reference signals transmitted simultaneously on the multiple CCs that need to be aggregated need to be treated as one reference signal for transmission. Treating it as one reference signal for transmission can be understood as: if it is PRS, the terminal obtains one measurement value for the same measurement quantity (quantity) for the reference signals transmitted simultaneously on multiple CCs, for example, obtaining one Reference Signal Time Difference (RSTD), or one Rx-Tx time difference; whereas if it is SRS, the terminal transmits reference signals simultaneously on multiple CCs, and the base station or TRP obtains one measurement value for the same measurement quantity (quantity) for the reference signals transmitted simultaneously on multiple CCs, for example, obtaining a Relative Time of Arrival (RTOA), or an Rx-Tx time difference.

In some embodiments, the configuration information includes at least one of:
first configuration information of the reference signal on one CC;
second configuration information of the reference signal on one PFL;
third configuration information of the reference signal on multiple CCs; or
fourth configuration information of the reference signal on multiple PFLs.

In embodiments of the present disclosure, the configuration information may include first configuration information of the reference signal on one CC.

In embodiments of the present disclosure, the configuration information may include second configuration information of the reference signal on one PFL.

In embodiments of the present disclosure, the configuration information may include third configuration information of the reference signal on multiple CCs.

In embodiments of the present disclosure, the configuration information may include fourth configuration information of the reference signal on multiple PFLs.

It should be noted that the above embodiments are not exhaustive, but are only illustrative of some embodiments, and the above embodiments can be implemented alone or in combination with multiple embodiments. The embodiments of the present disclosure do not impose specific limitations on this.

In embodiments of the present disclosure, one piece of configuration information corresponding to the parameter information of the reference signal may include at least one of: PRS based on a single CC, SRS based on a single CC, PRS based on a single PFL, SRS based on a single PFL, PRS based on multiple CCs, SRS based on multiple CCs, PRS based on multiple PFLs, and SRS based on multiple PFLs.

In some embodiments, the third configuration information indicates multiple CCs supporting carrier aggregation; or the fourth configuration information indicates multiple PFLs supporting carrier aggregation.

In embodiments of the present disclosure, the third configuration information indicates multiple CCs supporting carrier aggregation. It is understandable that the multiple CCs for carrier aggregation are used to transmit the reference signal. The reference signals transmitted on different CCs here are all reference signals used for positioning, but the corresponding reference signal resource IDs may be the same or different.

For the third configuration information, it indicates which multiple CCs the network-side device prefers the terminal to select for linking, to achieve carrier aggregation.

In embodiments of the present disclosure, the fourth configuration information indicates multiple PFLs supporting carrier aggregation. It is understandable that the multiple PFLs for carrier aggregation are used to transmit the reference signal. The reference signals transmitted on different PFLs here are all reference signals used for positioning, but the corresponding reference signal resource IDs may be the same or different.

For the fourth configuration information, it indicates which multiple PFLs the network-side device prefers the terminal to select for linking, to achieve carrier aggregation.

For example, a link identifier (ID) can be configured for each CC or each PFL respectively, and CCs or PFLs corresponding to the same link identifier are those that need to be aggregated. In this case, it can be implemented to configure one or more sets of CC combinations for the terminal simultaneously, and CCs within different combinations need to be aggregated separately; or it can be implemented to configure one or more sets of PFL combinations for the terminal simultaneously, and PFLs within different combinations need to be aggregated separately.

For example, a CC group IE can be configured, where the CC group includes multiple CC identifiers, then the CCs in the CC group are those that need to be aggregated. Thereby, it can be implemented to configure one or more CC groups for the terminal simultaneously, and CCs within different CC groups need to be aggregated separately. Or a PFL group IE can be configured, where the PFL group includes multiple PFL identifiers, then the PFLs in the PFL group are those that need to be aggregated. Thereby, it can be implemented to configure one or more PFL groups for the terminal simultaneously, and PFLs within different PFL groups need to be aggregated separately.

In some embodiments, the configuration information indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In embodiments of the present disclosure, the configuration information indicates aggregation attributes corresponding to multiple reference signal resources in a reference signal resource set. The configuration information indicates that the aggregation attributes corresponding to the multiple reference signal resources in a reference signal resource set are all the same. In this case, only one aggregation attribute needs to be configured for the reference signal resource set.

In embodiments of the present disclosure, the aggregation (or link) attributes corresponding to all reference signal resources in a reference signal resource set (e.g., PRS resource set or SRS resource set) are the same, meaning all reference signal resources have an aggregation (or link) relationship with corresponding reference signal resources in another reference signal resource set on another CC; or all reference signal resources have no aggregation (or link) relationship with any reference signal resource.

For example, the link attributes corresponding to all PRS resources in a PRS resource set are the same, meaning all PRS resources have a link relationship with corresponding PRS resources in another PRS resource set on another CC; or all PRS resources have no link relationship with any PRS resource.

For example, the link attributes corresponding to all SRS resources in an SRS resource set are the same, meaning all SRS resources have a link relationship with corresponding SRS resources in another SRS resource set on another CC; or all SRS resources have no link relationship with any SRS resource.

It is understandable that the aggregation (or link) attribute refers to the aggregation (or link) relationship with other reference signal resource sets or reference signal resources. The same aggregation (or link) attribute, for example, reference signal resource set #1 and reference signal resource set #2 have an aggregation (or link) relationship, means that the aggregation (or link) attributes of all reference signal resources within reference signal resource set #1 are the same. Then the reference signal resources of reference signal resource set #1 and reference signal resource set #2 can be aggregated.

Specifically, which reference signal resource of reference signal resource set #2 reference signal resource #1 of reference signal resource set #1 aggregates with can follow a default rule, such as those with the same identifier (ID), or the same time position, etc.

In embodiments of the present disclosure, the configuration information indicates aggregation attributes corresponding to multiple reference signal resources in a reference signal resource set. The configuration information indicates that the aggregation attributes corresponding to the multiple reference signal resources in a reference signal resource set are partially or entirely different. In this case, aggregation attributes need to be configured separately for each reference signal resource in the reference signal resource set.

In embodiments of the present disclosure, the aggregation attributes corresponding to all reference signal resources in a reference signal resource set (e.g., PRS resource set or SRS resource set) are different, meaning some reference signal resources have an aggregation relationship with their corresponding reference signal resources, some reference signal resources have no aggregation relationship with any reference signal resource; or some reference signal resources have an aggregation relationship with corresponding reference signal resources in one reference signal resource set, and some reference signal resources have an aggregation relationship with corresponding reference signal resources in another reference signal resource set.

For example, the link attributes corresponding to all PRS resources in a PRS resource set are different, meaning some PRS resources have a link relationship with their corresponding PRS resources, some PRS resources have no link relationship with any PRS resource; or some PRS resources have a link relationship with corresponding PRS resources in one PRS resource set, and some PRS resources have a link relationship with corresponding PRS resources in another PRS resource set.

The corresponding PRS resource for a PRS resource can be determined by LMF configuration. For example, the LMF can configure a link ID for a PRS resource or PRS resource set, and those with the same ID can be aggregated.

For example, the link attributes corresponding to all SRS resources in an SRS resource set are different, meaning some SRS resources have a link relationship with their corresponding SRS resources, some SRS resources have no link relationship with any SRS resource; or some SRS resources have a link relationship with corresponding SRS resources in one SRS resource set, and some SRS resources have a link relationship with corresponding SRS resources in another SRS resource set.

The corresponding SRS resource for an SRS resource can be determined by base station configuration. For example, the base station can configure a link ID for an SRS resource or SRS resource set, and those with the same ID can be aggregated.

It is understandable that the aggregation (or link) attribute refers to the aggregation (or link) relationship with other reference signal resource sets or reference signal resources. Different aggregation attributes of reference signal resources within reference signal resource set #1 mean that, for example, reference signal resource #1 of reference signal resource set #1 has an aggregation relationship with reference signal resource #1 of reference signal resource set #2 and can be aggregated; whereas reference signal resource #2 of reference signal resource set #1 has no aggregation relationship with any other reference signal resource, or reference signal resource #2 of reference signal resource set #1 has an aggregation relationship with reference signal resource #2 of reference signal resource set #3. Therefore, this needs to be configured for each reference signal resource. It does not mean that those with the same aggregation attribute can be aggregated.

In some embodiments, the configuration information indicates aggregation attributes corresponding to multiple TRPs, where the aggregation attributes corresponding to the multiple TRPs are all the same, or the aggregation attributes corresponding to the multiple TRPs are partially or entirely different.

In embodiments of the present disclosure, the configuration information indicates aggregation attributes corresponding to multiple TRPs.

The configuration information indicates that the aggregation attributes corresponding to the multiple TRPs are all the same. In this case, the configuration information can be used to instruct all TRPs of the network-side device to transmit PRS on the same multiple CCs or multiple PFLs, or transmit SRS on the same multiple CCs or multiple PFLs.

The configuration information indicates that the aggregation attributes corresponding to the multiple TRPs are partially or entirely different. In this case, the configuration information can be used to instruct some or all TRPs of the network-side device to respectively transmit PRS on different multiple CCs or multiple PFLs, or respectively transmit SRS on different multiple CCs or multiple PFLs.

For example, the configuration information indicates that the aggregation (link) attributes corresponding to all TRPs are the same, meaning all TRPs transmit PRS based on the same multiple CCs, or SRS based on the same multiple CCs, or PRS based on the same multiple PFLs, or SRS based on the same multiple PFLs.

For example, the configuration information indicates that the link attributes corresponding to all TRPs are partially or entirely different, meaning some TRPs transmit PRS based on these multiple CCs, or SRS based on these multiple CCs, or PRS based on these multiple PFLs, or SRS based on these multiple PFLs; some TRPs transmit PRS based on other multiple CCs, or SRS based on other multiple CCs, or PRS based on other multiple PFLs, or SRS based on other multiple PFLs; or some TRPs transmit PRS based on a single CC, or SRS based on a single CC, or PRS based on a single PFL, or SRS based on a single PFL.

In some embodiments, the indication method for the configuration information can, within the parameters of each TRP, if the TRP supports aggregation, provide an aggregation identifier corresponding to each TRP, or a TRP group identifier, or a CC group identifier, or a PFL group identifier; otherwise, this field is empty, or is an aggregation identifier or group identifier that defaults to not supporting aggregation.

In embodiments of the present disclosure, the parameters for each TRP include the following content:

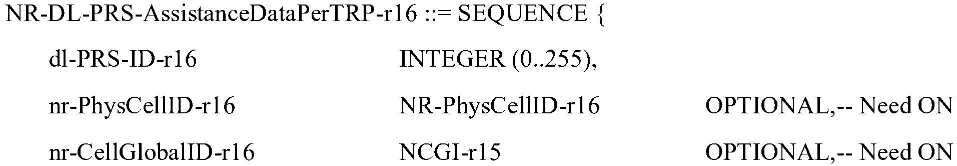

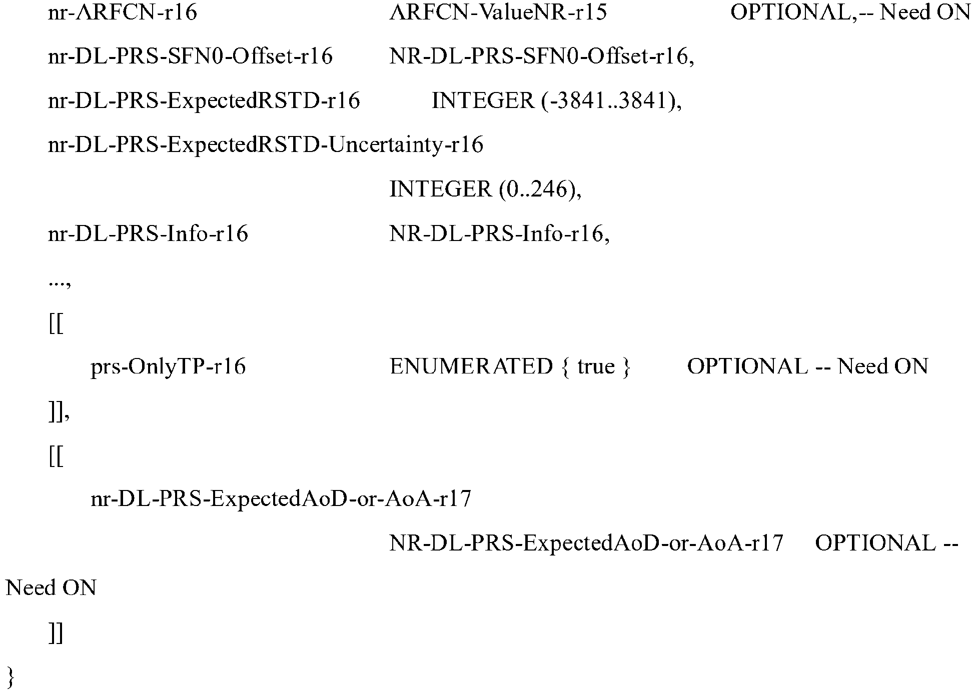

In some embodiments, the configuration information indicates multiple reference signal configurations, where each of the multiple reference signal configurations corresponds to an identifier, and each of the multiple reference signal configurations includes parameter information of the reference signal on at least one CC or at least one PFL.

In embodiments of the present disclosure, the configuration information indicates multiple reference signal configurations, where each of the multiple reference signal configurations corresponds to an identifier, and each of the multiple reference signal configurations includes parameter information of the reference signal on at least one CC or at least one PFL.

For example, the configuration information can configure multiple reference signal configuration IDs, and at least one CC/at least one PFL corresponding to each ID (i.e., some IDs may correspond to one CC/one PFL, some may correspond to multiple CCs/multiple PFLs).

It should be noted that relevant descriptions of the reference signal can be found in the related descriptions in the above embodiments and will not be repeated here.

It should be noted that, in embodiments of the present disclosure, S41 can be implemented alone or in combination with any other step in the embodiments of the present disclosure, such as in combination with S21 and/or S31 of the embodiments of the present disclosure. The embodiments of the present disclosure do not impose limitations on this.

In this embodiment or implementation, provided there is no contradiction, the steps can be independent, arbitrarily combined, or their order exchanged; optional methods or examples can be arbitrarily combined and can also be arbitrarily combined with other embodiments or implementations.

By implementing the embodiments of the present disclosure, the terminal receives configuration information sent by the network-side device, where the configuration information includes parameter information of a reference signal, the parameter information includes a frequency-domain resource corresponding to the reference signal, and the frequency-domain resource includes at least one CC or at least one PFL. Thereby, it is possible to realize the configuration for the terminal, when in carrier aggregation, for transmitting a reference signal based on at least one CC or at least one PFL, provide a method for receiving the configuration of a reference signal under carrier aggregation, and improve the positioning accuracy of positioning reference signal transmission based on carrier aggregation.

Please refer to FIG. 5, which is a flowchart of yet another method for configuring a reference signal according to an embodiment of the present disclosure. As shown in FIG. 5, the method is performed by a terminal and may include, but is not limited to, the following steps:

S51: receiving configuration information sent by a network-side device, where the configuration information indicates multiple reference signal configurations, each of the multiple reference signal configurations corresponds to an identifier, and each of the multiple reference signal configurations includes parameter information of a reference signal on at least one CC or at least one PFL.

In an embodiment, the network-side device is a base station, the terminal receives configuration information sent by the network-side device. The configuration information may reuse existing signaling or messages, for example, at least one of Radio Resource Control (RRC) signaling, MAC CE, Downlink Control Information (DCI), or may also use new signaling or messages. The embodiments of the present disclosure do not impose specific limitations on this.

In an embodiment, where the network-side device is an LMF, the terminal receives configuration information sent by the network-side device, and may use the LPP protocol to receive the configuration information sent by the LMF.

In embodiments of the present disclosure, the terminal receives configuration information sent by the network-side device and can determine pre-configured multiple reference signal configurations.

Each reference signal configuration corresponds to an identifier, and each reference signal configuration includes parameter information of a reference signal on at least one CC or at least one PFL.

In some embodiments, the configuration information includes at least one of:
first configuration information of the reference signal on one CC;
second configuration information of the reference signal on one PFL;
third configuration information of the reference signal on multiple CCs; or
fourth configuration information of the reference signal on multiple PFLs.

In embodiments of the present disclosure, the configuration information may include first configuration information of the reference signal on one CC.

In embodiments of the present disclosure, the configuration information may include second configuration information of the reference signal on one PFL.

In embodiments of the present disclosure, the configuration information may include third configuration information of the reference signal on multiple CCs.

In embodiments of the present disclosure, the configuration information may include fourth configuration information of the reference signal on multiple PFLs.

It should be noted that the above embodiments are not exhaustive, but are only illustrative of some embodiments, and the above embodiments can be implemented alone or in combination with multiple embodiments. The embodiments of the present disclosure do not impose specific limitations on this.

In embodiments of the present disclosure, one piece of configuration information corresponding to the parameter information of the reference signal may include at least one of: PRS based on a single CC, SRS based on a single CC, PRS based on a single PFL, SRS based on a single PFL, PRS based on multiple CCs, SRS based on multiple CCs, PRS based on multiple PFLs, and SRS based on multiple PFLs.

For example, the configuration information can configure identifiers (IDs) corresponding to multiple reference signal configurations, and at least one CC/at least one PFL corresponding to each ID (i.e., some IDs may correspond to one CC/one PFL, some may correspond to multiple CCs/multiple PFLs).

It should be noted that relevant descriptions of the reference signal can be found in the related descriptions in the above embodiments and will not be repeated here.

S52: sending a request message to the network-side device, where the request message indicates a target identifier, and the target identifier is an identifier corresponding to a target reference signal configuration selected by the terminal from the multiple reference signal configurations configured by the network-side device.

In an embodiment, where the network-side device is a base station, the terminal sends a request message to the base station. The request message may reuse existing signaling or messages, or may also use new signaling or messages. The embodiments of the present disclosure do not impose specific limitations on this.

For example, the request message may be a random access request message, or a scheduling request message, or a MAC CE, etc.

In an embodiment, where the network-side device is an LMF, the terminal sends a request message to the LMF, and may use the LPP protocol to send the request message to the LMF.

In some embodiments, the request message is at least one of:
a first request message including a single CC;
a second request message including a single PFL;
a third request message including multiple CCs; or
a fourth request message including multiple PFLs.

In embodiments of the present disclosure, the request message may be a first request message including a single CC.

In embodiments of the present disclosure, the request message may be a second request message including a single PFL.

In embodiments of the present disclosure, the request message may be a third request message including multiple CCs.

In embodiments of the present disclosure, the request message may be a fourth request message including multiple PFLs.

It should be noted that the above embodiments are not exhaustive, but are only illustrative of some embodiments, and the above embodiments can be implemented alone or in combination with multiple embodiments. The embodiments of the present disclosure do not impose specific limitations on this.

In embodiments of the present disclosure, the request message, i.e., one request, may include at least one of: an on-demand PRS request based on a single CC, an on-demand PRS request based on a single PFL, an on-demand PRS request based on multiple CCs, and an on-demand PRS request based on multiple PFLs.

In embodiments of the present disclosure, the request message indicates a target identifier, where the target identifier is an identifier corresponding to a target reference signal configuration selected by the terminal from the multiple reference signal configurations configured by the network-side device, and different reference signal configurations correspond to different identifiers.

For example, the request message from the terminal can include an identifier (ID) corresponding to a reference signal (e.g., on-demand PRS/PRS/SRS), where the ID corresponding to on-demand PRS can be dl-prs-configuration-id. The reference signal configuration corresponding to the ID is configured by the LMF, and the terminal only needs to provide the target identifier (i.e., the ID value corresponding to one of the reference signal configurations) when making a request.
a) In this case, it is equivalent to the LMF providing multiple reference signal configurations, each corresponding to one ID.
b) The reference signal configuration corresponding to the ID value can be based on a single CC/single PFL, or can be aggregated transmission based on multiple CCs/multiple PFLs.

It should be noted that, in embodiments of the present disclosure, S51 and S52 can be implemented alone or in combination with any other step in the embodiments of the present disclosure, such as in combination with S21 and/or S31 and/or S41 of the embodiments of the present disclosure. The embodiments of the present disclosure do not impose limitations on this.

In this embodiment or implementation, provided there is no contradiction, the steps can be independent, arbitrarily combined, or their order exchanged; optional methods or examples can be arbitrarily combined and can also be arbitrarily combined with other embodiments or implementations.

By implementing the embodiments of the present disclosure, the terminal receives configuration information sent by the network-side device, where the configuration information indicates multiple reference signal configurations, each reference signal configuration corresponds to an identifier, each reference signal configuration includes parameter information of a reference signal on at least one CC or at least one PFL, and sends a request message to the network-side device, where the request message indicates a target identifier, and the target identifier is an identifier corresponding to a target reference signal configuration selected by the terminal from the multiple reference signal configurations configured by the network-side device. Thereby, it is possible to realize the request and configuration for the terminal, when in carrier aggregation, for transmitting a reference signal based on at least one CC or at least one PFL, provide a method for sending a request for a reference signal and receiving the configuration of a reference signal under carrier aggregation, and improve the positioning accuracy of positioning reference signal transmission based on carrier aggregation.

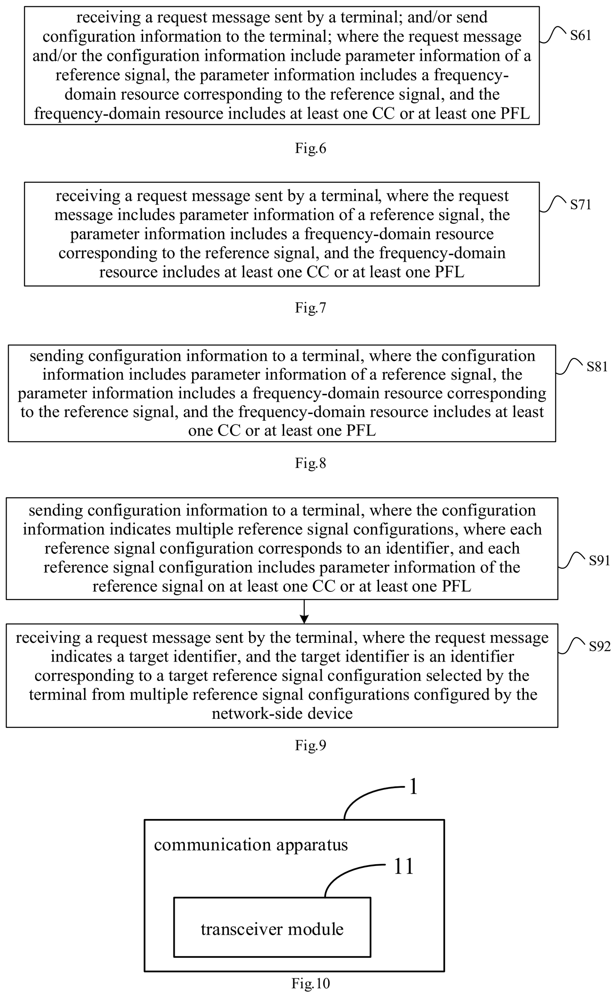

Please refer to FIG. 6, which is a flowchart of yet another method for configuring a reference signal according to an embodiment of the present disclosure. As shown in FIG. 6, the method is performed by a network-side device and may include, but is not limited to, the following steps:

S61: receiving a request message sent by a terminal; and/or send configuration information to the terminal; where the request message and/or the configuration information include parameter information of a reference signal, the parameter information includes a frequency-domain resource corresponding to the reference signal, and the frequency-domain resource includes at least one CC or at least one PFL.

In embodiments of the present disclosure, the network-side device can receive a request message sent by a terminal. The network-side device can be a base station or an LMF in the core network.

In an embodiment, where the network-side device is a base station, it receives a request message sent by the terminal. The request message may reuse existing signaling or messages, or may also use new signaling or messages. The embodiments of the present disclosure do not impose specific limitations on this.

For example, the request message may be a random access request message, or a scheduling request message, or a MAC CE, etc.

In an embodiment, where the network-side device is an LMF, it receives a request message sent by the terminal, and may use the LPP protocol to receive the request message sent by the terminal.

In embodiments of the present disclosure, the network-side device can send configuration information to the terminal. The network-side device can be a base station or an LMF in the core network.

In embodiments of the present disclosure, the parameter information includes a frequency-domain resource corresponding to the reference signal, and the frequency-domain resource includes at least one component carrier (CC) or at least one positioning frequency layer (PFL).

It is understandable that the configuration of the parameter information of the reference signal can be based on a single CC. However, if the aggregation attribute corresponding to the frequency-domain resource of the reference signal is aggregation of multiple CCs, and the time-domain transmission positions corresponding to the reference signals on the multiple CCs are the same, meaning the reference signals on these multiple CCs need to be aggregated into one reference signal for transmission. In this case, the reference signals on the multiple CCs will be treated as one reference signal for transmission. That is, when configuring the parameter information of the reference signal, a corresponding reference signal resource set and the reference signal resources contained in the reference signal resource set will be configured on each CC. For terminals transmitting reference signals based on a single CC, the reference signals on each CC are independent. For terminals transmitting reference signals based on multiple CCs, the reference signals transmitted simultaneously on the multiple CCs that need to be aggregated need to be treated as one reference signal for transmission. Treating it as one reference signal for transmission can be understood as: if it is PRS, the terminal obtains one measurement value for the same measurement quantity (quantity) for the reference signals transmitted simultaneously on multiple CCs, for example, obtaining one Reference Signal Time Difference (RSTD), or one Rx-Tx time difference; whereas if it is SRS, the terminal transmits reference signals simultaneously on multiple CCs, and the base station or TRP obtains one measurement value for the same measurement quantity (quantity) for the reference signals transmitted simultaneously on multiple CCs, for example, obtaining a Relative Time of Arrival (RTOA), or an Rx-Tx time difference.

In some embodiments, the reference signal includes at least one of:
a positioning reference signal (PRS); or
a sounding reference signal (SRS).

In embodiments of the present disclosure, the reference signal may include PRS.

PRS may include on-demand PRS. On-demand PRS is requested by the terminal and is only transmitted for a period of time. This period of time is indicated by the following two Information Elements (IEs). Of course, PRS also includes non-on-demand PRS. (The request for on-demand PRS and the configuration of PRS are transmitted between the terminal and the LMF using LPP protocol signaling).
1. dl-prs-start-time specifies the desired start time for the requested Downlink (DL)-PRS. It indicates the time in seconds from the time the IE NR-On-Demand-DL-PRS-Request was received.
2. dl-prs-duration specifies the desired duration of the requested DL-PRS. The desired duration is the sum of the seconds, minutes, hours fields. If this field is included, at least one of the seconds, minutes, hours fields shall be present.

In embodiments of the present disclosure, the reference signal may include SRS.

In some embodiments, the SRS may include at least one of a periodic SRS, a semi-persistent SRS (SP-SRS), or an aperiodic SRS (AP-SRS) (where the request and configuration of the SRS are transmitted between the terminal and a base station (gNB)).

In the embodiments of the present disclosure, the SRS may include at least one of an SRS for positioning and an SRS for Multiple Input Multiple Output (MIMO).

It can be understood that, to improve the accuracy of time-based positioning methods, a method of carrier aggregation for transmitting reference signals is proposed, where the carrier aggregation involves at least one Component Carrier (CC) or at least one Positioning Frequency Layer (PFL).

Based on this, in the embodiments of the present disclosure, a network-side device receives a request message sent by a terminal; and/or sends configuration information to the terminal, where parameter information includes a frequency-domain resource corresponding to the reference signal, and the frequency-domain resource includes at least one CC or at least one PFL. Thereby, the network-side device can receive a request from the terminal, which is capable of sending a reference signal based on at least one CC or at least one PFL under carrier aggregation, and/or the network-side device can send a configuration for a reference signal based on at least one CC or at least one PFL to the terminal.

In this embodiment or implementation, where there is no contradiction, the steps may be independent, arbitrarily combined, or exchanged in order; optional methods or examples may be arbitrarily combined and may be arbitrarily combined with other implementations or embodiments.

By implementing the embodiments of the present disclosure, the network-side device receives a request message sent by the terminal; and/or sends configuration information to the terminal, where the request message and/or the configuration information include parameter information of a reference signal, the parameter information includes a frequency-domain resource corresponding to the reference signal, and the frequency-domain resource includes at least one CC or at least one PFL. Thereby, it is possible to implement a request and/or configuration for the terminal to transmit a reference signal based on at least one CC or at least one PFL under carrier aggregation, provide a method for requesting to send a reference signal under carrier aggregation and/or receiving a configuration for a reference signal, and improve the positioning accuracy based on the transmission of a positioning reference signal using carrier aggregation.

Please refer to FIG. 7, which is a flowchart of yet another method for configuring a reference signal according to an embodiment of the present disclosure. As shown in FIG. 7, the method is performed by a network-side device and may include, but is not limited to, the following steps:

S71: receiving a request message sent by a terminal, where the request message includes parameter information of a reference signal, the parameter information includes a frequency-domain resource corresponding to the reference signal, and the frequency-domain resource includes at least one CC or at least one PFL.

In an embodiment, where the network-side device is a base station, receiving the request message sent by the terminal, where the request message may reuse existing signaling or messages, or may also use new signaling or messages, which is not specifically limited in the embodiments of the present disclosure.

Exemplarily, the request message may be a random access request message, or a scheduling request message, or a Medium Access Control Control Element (MAC CE), etc.

In an embodiment, where the network-side device is a Location Management Function (LMF), receiving the request message sent by the terminal, where the request message may be sent to the LMF using the LTE Positioning Protocol (LPP).

In the embodiments of the present disclosure, the parameter information includes a frequency-domain resource corresponding to the reference signal, and the frequency-domain resource includes at least one Component Carrier (CC) or at least one Positioning Frequency Layer (PFL).

It can be understood that the configuration of the parameter information of the reference signal may be based on a single CC. However, if the aggregation attribute corresponding to the frequency-domain resource of the reference signal is the aggregation of multiple CCs, and the time-domain transmission positions corresponding to the reference signals on the multiple CCs are the same, meaning that the reference signals on these multiple CCs need to be aggregated into one reference signal for transmission. In this case, the reference signals on the multiple CCs are treated as one reference signal for transmission. That is to say, when configuring the parameter information of the reference signal, a corresponding reference signal resource set and the reference signal resources contained in the reference signal resource set are configured on each CC. For a terminal transmitting reference signals based on a single CC, the reference signals on each CC are independent. For a terminal transmitting reference signals based on multiple CCs, the reference signals transmitted simultaneously on the multiple CCs that need to be aggregated for transmission need to be treated as one reference signal for transmission. Being treated as one reference signal for transmission can be understood as: if it is a Positioning Reference Signal (PRS), the terminal obtains one measurement value for the same measurement quantity (quantity) for the reference signals transmitted simultaneously on multiple CCs, for example, obtaining one Reference Signal Time Difference (RSTD), or one Rx-Tx time difference; and if it is an SRS, the terminal transmits reference signals simultaneously on multiple CCs, and the base station or Transmission Reception Point (TRP) obtains one measurement value for the same measurement quantity (quantity) for the reference signals transmitted simultaneously on multiple CCs, for example, obtaining one Relative Time of Arrival (RTOA), or one Rx-Tx time difference.

In some embodiments, the request message includes at least one of:
a first request message including a single CC;
a second request message including a single PFL;
a third request message including multiple CCs; or
a fourth request message including multiple PFLs.

In an embodiment of the present disclosure, the request message may be the first request message including a single CC.

In an embodiment of the present disclosure, the request message may be the second request message including a single PFL.

In an embodiment of the present disclosure, the request message may be the third request message including multiple CCs.

In an embodiment of the present disclosure, the request message may be the fourth request message including multiple PFLs.

It should be noted that the above embodiments are not exhaustive and are only illustrative of some embodiments, and the above embodiments may be implemented individually or in combination with multiple embodiments, which is not specifically limited in the embodiments of the present disclosure.

In the embodiments of the present disclosure, the request message, i.e., a request, may include at least one of: an on-demand PRS request based on a single CC, an on-demand PRS request based on a single PFL, an on-demand PRS request based on multiple CCs, and an on-demand PRS request based on multiple PFLs.

In some embodiments, the third request message indicates multiple CCs supported by the terminal for carrier aggregation; or the fourth request message indicates multiple PFLs supported by the terminal for carrier aggregation.

In the embodiments of the present disclosure, the third request message indicates multiple CCs supported by the terminal for carrier aggregation. It can be understood that the multiple CCs for carrier aggregation are used to transmit the reference signal. The reference signals transmitted on different CCs here are all used for positioning, but the corresponding reference signal resource IDs may be the same or different.

For the third request message, it indicates which multiple CCs the terminal itself prefers to support for linking to achieve carrier aggregation.

In the embodiments of the present disclosure, the fourth request message indicates multiple PFLs supported by the terminal for carrier aggregation. It can be understood that the multiple PFLs for carrier aggregation are used to transmit the reference signal. The reference signals transmitted on different PFLs here are all used for positioning, but the corresponding reference signal resource IDs may be the same or different.

For the fourth request message, it indicates which multiple PFLs the terminal itself prefers to support for linking to achieve carrier aggregation.

Exemplarily, a link identifier (ID) may be configured for each CC or each PFL respectively, and the CCs or PFLs corresponding to the same link ID are those that need to be aggregated. In this case, the terminal can simultaneously request one or more sets of CC combinations, and the CCs within different combinations need to be aggregated separately; or the terminal can simultaneously request one or more sets of PFL combinations, and the PFLs within different combinations need to be aggregated separately.

Exemplarily, a CC group Information Element (IE) may be configured, where the CC group includes multiple CC identifiers, and the CCs in the CC group are those that need to be aggregated. Thereby, the terminal can simultaneously request one or more CC groups, and the CCs within different CC groups need to be aggregated separately. Or, a PFL group IE may be configured, where the PFL group includes multiple PFL identifiers, and the PFLs in the PFL group are those that need to be aggregated. Thereby, the terminal can simultaneously request one or more PFL groups, and the PFLs within different PFL groups need to be aggregated separately.

In some embodiments, the request message indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

**In** the embodiments of the present disclosure, the request message indicates aggregation attributes corresponding to multiple reference signal resources in one reference signal resource set. The request message indicates that the aggregation attributes corresponding to the multiple reference signal resources in one reference signal resource set are all the same. In this case, only one aggregation attribute needs to be configured for the reference signal resource set.

**In** the embodiments of the present disclosure, the aggregation (or link) attributes corresponding to all reference signal resources in one reference signal resource set (e.g., a PRS resource set or an SRS resource set) are the same, meaning that all reference signal resources have an aggregation (or link) relationship with corresponding reference signal resources in another reference signal resource set on another CC; or all reference signal resources have no aggregation (or link) relationship with any reference signal resource.

Exemplarily, the link attributes corresponding to all PRS resources in a PRS resource set are the same, meaning that all PRS resources have a link relationship with corresponding PRS resources in a PRS resource set on another CC; or all PRS resources have no link relationship with any PRS resource.

Exemplarily, the link attributes corresponding to all SRS resources in an SRS resource set are the same, meaning that all SRS resources have a link relationship with corresponding SRS resources in an SRS resource set on another CC; or all SRS resources have no link relationship with any SRS resource.

It can be understood that the aggregation (or link) attribute is the aggregation (or link) relationship with other reference signal resource sets or reference signal resources. The aggregation (or link) attributes are the same. For example, if reference signal resource set #1 and reference signal resource set #2 have an aggregation (or link) relationship, it means that the aggregation (or link) attributes of all reference signal resources in reference signal resource set #1 are the same. Then the reference signal resources of reference signal resource set #1 and reference signal resource set #2 can be aggregated.

Specifically, which reference signal resource of reference signal resource set #2 the reference signal resource #1 of reference signal resource set #1 aggregates with may follow a default rule, such as having the same identifier (ID), or the same time position, etc.

**In** the embodiments of the present disclosure, the request message indicates aggregation attributes corresponding to multiple reference signal resources in one reference signal resource set. The request message indicates that the aggregation attributes corresponding to the multiple reference signal resources in one reference signal resource set are partially or entirely different. In this case, the aggregation attribute needs to be configured separately for each reference signal resource in the reference signal resource set.

In the embodiments of the present disclosure, the aggregation attributes corresponding to all reference signal resources in one reference signal resource set (e.g., a PRS resource set or an SRS resource set) are different, meaning that some reference signal resources have an aggregation relationship with their corresponding reference signal resources, some reference signal resources have no aggregation relationship with any reference signal resource; or some reference signal resources have an aggregation relationship with corresponding reference signal resources in one reference signal resource set, and some reference signal resources have an aggregation relationship with corresponding reference signal resources in another reference signal resource set.

Exemplarily, the link attributes corresponding to all PRS resources in a PRS resource set are different, meaning that some PRS resources have a link relationship with their corresponding PRS resources, some PRS resources have no link relationship with any PRS resource; or some PRS resources have a link relationship with corresponding PRS resources in one PRS resource set, and some PRS resources have a link relationship with corresponding PRS resources in another PRS resource set.

Exemplarily, the link attributes corresponding to all SRS resources in an SRS resource set are different, meaning that some SRS resources have a link relationship with their corresponding SRS resources, some SRS resources have no link relationship with any SRS resource; or some SRS resources have a link relationship with corresponding SRS resources in one SRS resource set, and some SRS resources have a link relationship with corresponding SRS resources in another SRS resource set.

A request including PRS is sent by the terminal to the LMF; while a request including SRS may be sent by the terminal to the LMF or an access network device.

It can be understood that the aggregation (or link) attribute is the aggregation (or link) relationship with other reference signal resource sets or reference signal resources. The different aggregation attributes of reference signal resources in reference signal resource set #1 mean that, for example, reference signal resource #1 of reference signal resource set #1 has an aggregation relationship with reference signal resource #1 of reference signal resource set #2 and can be aggregated; while reference signal resource #2 of reference signal resource set #1 has no aggregation relationship with any other reference signal resource, or reference signal resource #2 of reference signal resource set #1 has an aggregation relationship with reference signal resource #2 of reference signal resource set #3. Therefore, this needs to be configured for each reference signal resource. It is not that reference signal resources with the same aggregation attribute can be aggregated.

In some embodiments, the request message indicates aggregation attributes corresponding to multiple Transmission Reception Points (TRPs), where the aggregation attributes corresponding to the multiple TRPs are all the same, or the aggregation attributes corresponding to the multiple TRPs are partially or entirely different.

In the embodiments of the present disclosure, the request message indicates aggregation attributes corresponding to multiple Transmission Reception Points (TRPs).

The request message indicates that the aggregation attributes corresponding to the multiple TRPs are all the same. In this case, the request message indicates that all TRPs of the network-side device transmit PRS on the same multiple CCs, or transmit SRS on the same multiple CCs, or transmit PRS on the same multiple PFLs, or transmit SRS on the same multiple PFLs.

The request message indicates that the aggregation attributes corresponding to the multiple TRPs are partially or entirely different. In this case, the request message indicates that some or all TRPs of the network-side device respectively transmit PRS on different multiple CCs, or respectively transmit SRS on different multiple CCs, or respectively transmit PRS on different multiple PFLs, or respectively transmit SRS on different multiple PFLs.

Exemplarily, the request message indicates that the aggregation (link) attributes corresponding to all TRPs are the same, meaning that all TRPs transmit PRS based on the same multiple CCs, or transmit SRS based on the same multiple CCs, or transmit PRS based on the same multiple PFLs, or transmit SRS based on the same multiple PFLs.

Exemplarily, the request message indicates that the link attributes corresponding to all TRPs are partially or entirely different, meaning that some TRPs transmit PRS based on these multiple CCs, or transmit SRS based on these multiple CCs, or transmit PRS based on these multiple PFLs, or transmit SRS based on these multiple PFLs; some TRPs transmit PRS based on other multiple CCs, or transmit SRS based on other multiple CCs, or transmit PRS based on other multiple PFLs, or transmit SRS based on other multiple PFLs; or some TRPs transmit PRS based on a certain CC, or transmit SRS based on a certain CC, or transmit PRS based on a certain PFL, or transmit SRS based on a certain PFL.

In some embodiments, for the indication method of the request message, within the parameters of each TRP, if the TRP supports aggregation, an aggregation identifier corresponding to each TRP, or a TRP group identifier, or a CC group identifier, or a PFL group identifier is provided; otherwise, this field is empty, or is an aggregation identifier or group identifier that does not support aggregation by default.

In the embodiments of the present disclosure, the parameters of each TRP include the following content:

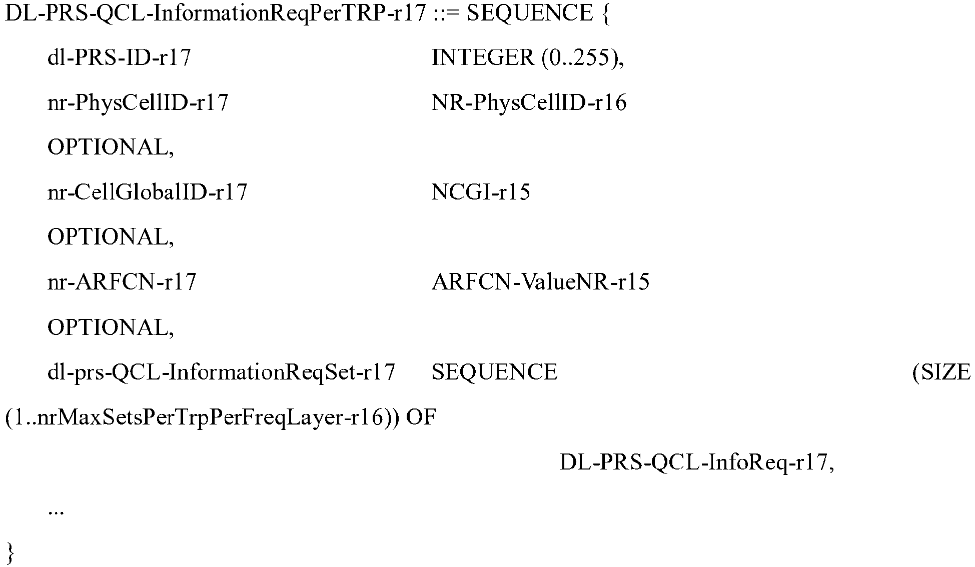

In some embodiments, the request message indicates a target identifier, where the target identifier is an identifier corresponding to a target reference signal configuration selected by the terminal from multiple reference signal configurations configured by the network-side device.

In the embodiments of the present disclosure, the request message indicates a target identifier, where the target identifier is an identifier corresponding to a target reference signal configuration selected by the terminal from multiple reference signal configurations configured by the network-side device, and different reference signal configurations correspond to different identifiers.

Exemplarily, the request message of the terminal may include an identifier (ID) corresponding to a reference signal (e.g., on-demand PRS/PRS/SRS), where the ID corresponding to the on-demand PRS may be dl-prs-configuration-id. The reference signal configuration corresponding to the ID is configured by the LMF, and the terminal only needs to provide the target identifier (i.e., the ID value corresponding to one of the reference signal configurations) when making a request.
a) In this case, it is equivalent to the LMF providing multiple reference signal configurations, each corresponding to one ID.
b) The reference signal configuration corresponding to the ID value may be based on a single CC/single PFL, or may be based on aggregated transmission of multiple CCs/multiple PFLs.

It should be noted that the related description of the reference signal can be referred to the related description in the above embodiments, and will not be repeated here.

It should be noted that, in the embodiments of the present disclosure, S71 may be implemented alone, or may be implemented in combination with any other step in the embodiments of the present disclosure, such as in combination with S61 of the embodiments of the present disclosure, which is not limited in the embodiments of the present disclosure.

In this embodiment or implementation, where there is no contradiction, the steps may be independent, arbitrarily combined, or exchanged in order; optional methods or examples may be arbitrarily combined and may be arbitrarily combined with other implementations or embodiments.

By implementing the embodiments of the present disclosure, the request message sent by the terminal is received, where the request message includes parameter information of a reference signal, the parameter information includes a frequency-domain resource corresponding to the reference signal, and the frequency-domain resource includes at least one CC or at least one PFL. Thereby, it is possible to implement the network-side device receiving a request from the terminal to transmit a reference signal based on at least one CC or at least one PFL under carrier aggregation, provide a method for the network-side device to receive a request from the terminal to send a reference signal under carrier aggregation, and improve the positioning accuracy based on the transmission of a positioning reference signal using carrier aggregation.

Please refer to FIG. 8, which is a flowchart of yet another method for configuring a reference signal according to an embodiment of the present disclosure. As shown in FIG. 8, the method is performed by a network-side device and may include, but is not limited to, the following steps:
S81: sending configuration information to a terminal, where the configuration information includes parameter information of a reference signal, the parameter information includes a frequency-domain resource corresponding to the reference signal, and the frequency-domain resource includes at least one CC or at least one PFL.

In an embodiment, where the network-side device is a base station, sending configuration information to the terminal, where the configuration information may reuse existing signaling or messages, for example, at least one of Radio Resource Control (RRC) signaling, a MAC CE, or Downlink Control Information (DCI), or may also use new signaling or messages, which is not specifically limited in the embodiments of the present disclosure.

In an embodiment, the network-side device is an LMF, sending configuration information to the terminal, where the configuration information may be sent to the terminal using the LPP protocol.

In the embodiments of the present disclosure, the configuration information includes parameter information of a reference signal, and the configuration information is used to configure the parameter information of the reference signal for the terminal.

The parameter information of the reference signal may be directly configured to the terminal, for example, a non-preconfigured on-demand configuration; if it is a preconfigured on-demand configuration, multiple sets of reference signal configurations (configurations of parameter information of the reference signal) may be configured for the terminal, each corresponding to an ID, and the terminal only needs to indicate the ID when sending the request message.

In the embodiments of the present disclosure, the parameter information includes a frequency-domain resource corresponding to the reference signal, and the frequency-domain resource includes at least one Component Carrier (CC) or at least one Positioning Frequency Layer (PFL).

It can be understood that the configuration of the parameter information of the reference signal may be based on a single CC. However, if the aggregation attribute corresponding to the frequency-domain resource of the reference signal is the aggregation of multiple CCs, and the time-domain transmission positions corresponding to the reference signals on the multiple CCs are the same, meaning that the reference signals on these multiple CCs need to be aggregated into one reference signal for transmission. In this case, the reference signals on the multiple CCs are treated as one reference signal for transmission. That is to say, when configuring the parameter information of the reference signal, a corresponding reference signal resource set and the reference signal resources contained in the reference signal resource set are configured on each CC. For a terminal transmitting reference signals based on a single CC, the reference signals on each CC are independent. For a terminal transmitting reference signals based on multiple CCs, the reference signals transmitted simultaneously on the multiple CCs that need to be aggregated for transmission need to be treated as one reference signal for transmission. Being treated as one reference signal for transmission can be understood as: if it is a PRS, the terminal obtains one measurement value for the same measurement quantity (quantity) for the reference signals transmitted simultaneously on multiple CCs, for example, obtaining one RSTD, or one Rx-Tx time difference; and if it is an SRS, the terminal transmits reference signals simultaneously on multiple CCs, and the base station or TRP obtains one measurement value for the same measurement quantity (quantity) for the reference signals transmitted simultaneously on multiple CCs, for example, obtaining one RTOA, or one Rx-Tx time difference.

In some embodiments, the configuration information includes at least one of:
first configuration information of the reference signal on one CC;
second configuration information of the reference signal on one PFL;
third configuration information of the reference signal on multiple CCs; or
fourth configuration information of the reference signal on multiple PFLs.

In an embodiment of the present disclosure, the configuration information may include the first configuration information of the reference signal on one CC.

In an embodiment of the present disclosure, the configuration information may include the second configuration information of the reference signal on one PFL.

In an embodiment of the present disclosure, the configuration information may include the third configuration information of the reference signal on multiple CCs.

In an embodiment of the present disclosure, the configuration information may include the fourth configuration information of the reference signal on multiple PFLs.

It should be noted that the above embodiments are not exhaustive and are only illustrative of some embodiments, and the above embodiments may be implemented individually or in combination with multiple embodiments, which is not specifically limited in the embodiments of the present disclosure.

In the embodiments of the present disclosure, one piece of configuration information corresponding to the parameter information of the reference signal may include at least one of: PRS based on a single CC, SRS based on a single CC, PRS based on a single PFL, SRS based on a single PFL, PRS based on multiple CCs, SRS based on multiple CCs, PRS based on multiple PFLs, and SRS based on multiple PFLs.

In some embodiments, the third configuration information indicates multiple CCs supporting carrier aggregation; or the fourth configuration information indicates multiple PFLs supporting carrier aggregation.

In the embodiments of the present disclosure, the third configuration information indicates multiple CCs supporting carrier aggregation. It can be understood that the multiple CCs for carrier aggregation are used to transmit the reference signal. The reference signals transmitted on different CCs here are all used for positioning, but the corresponding reference signal resource IDs may be the same or different.

For the third configuration information, it indicates which multiple CCs the network-side device prefers the terminal to select for linking to achieve carrier aggregation.

In the embodiments of the present disclosure, the fourth configuration information indicates multiple PFLs supporting carrier aggregation. It can be understood that the multiple PFLs for carrier aggregation are used to transmit the reference signal. The reference signals transmitted on different PFLs here are all used for positioning, but the corresponding reference signal resource IDs may be the same or different.

For the fourth configuration information, it indicates which multiple PFLs the network-side device prefers the terminal to select for linking to achieve carrier aggregation.

Exemplarily, a link identifier (ID) may be configured for each CC or each PFL respectively, and the CCs or PFLs corresponding to the same link ID are those that need to be aggregated. In this case, one or more sets of CC combinations may be simultaneously configured for the terminal, and the CCs within different combinations need to be aggregated separately; or one or more sets of PFL combinations may be simultaneously configured for the terminal, and the PFLs within different combinations need to be aggregated separately.

Exemplarily, a CC group IE may be configured, where the CC group includes multiple CC identifiers, and the CCs in the CC group are those that need to be aggregated. Thereby, one or more CC groups may be simultaneously configured for the terminal, and the CCs within different CC groups need to be aggregated separately. Or, a PFL group IE may be configured, where the PFL group includes multiple PFL identifiers, and the PFLs in the PFL group are those that need to be aggregated. Thereby, one or more PFL groups may be simultaneously configured for the terminal, and the PFLs within different PFL groups need to be aggregated separately.

In some embodiments, the configuration information indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In the embodiments of the present disclosure, the configuration information indicates aggregation attributes corresponding to multiple reference signal resources in one reference signal resource set. The configuration information indicates that the aggregation attributes corresponding to the multiple reference signal resources in one reference signal resource set are all the same. In this case, only one aggregation attribute needs to be configured for the reference signal resource set.

In the embodiments of the present disclosure, the aggregation (or link) attributes corresponding to all reference signal resources in one reference signal resource set (e.g., a PRS resource set or an SRS resource set) are the same, meaning that all reference signal resources have an aggregation (or link) relationship with corresponding reference signal resources in another reference signal resource set on another CC; or all reference signal resources have no aggregation (or link) relationship with any reference signal resource.

Exemplarily, the link attributes corresponding to all PRS resources in a PRS resource set are the same, meaning that all PRS resources have a link relationship with corresponding PRS resources in a PRS resource set on another CC; or all PRS resources have no link relationship with any PRS resource.

Exemplarily, the link attributes corresponding to all SRS resources in an SRS resource set are the same, meaning that all SRS resources have a link relationship with corresponding SRS resources in an SRS resource set on another CC; or all SRS resources have no link relationship with any SRS resource.

It can be understood that the aggregation (or link) attribute is the aggregation (or link) relationship with other reference signal resource sets or reference signal resources. The aggregation (or link) attributes are the same. For example, if reference signal resource set #1 and reference signal resource set #2 have an aggregation (or link) relationship, it means that the aggregation (or link) attributes of all reference signal resources in reference signal resource set #1 are the same. Then the reference signal resources of reference signal resource set #1 and reference signal resource set #2 can be aggregated.

Specifically, which reference signal resource of reference signal resource set #2 the reference signal resource #1 of reference signal resource set #1 aggregates with may follow a default rule, such as having the same identifier (ID), or the same time position, etc.

In the embodiments of the present disclosure, the configuration information indicates aggregation attributes corresponding to multiple reference signal resources in one reference signal resource set. The configuration information indicates that the aggregation attributes corresponding to the multiple reference signal resources in one reference signal resource set are partially or entirely different. In this case, the aggregation attribute needs to be configured separately for each reference signal resource in the reference signal resource set.

In the embodiments of the present disclosure, the aggregation attributes corresponding to all reference signal resources in one reference signal resource set (e.g., a PRS resource set or an SRS resource set) are different, meaning that some reference signal resources have an aggregation relationship with their corresponding reference signal resources, some reference signal resources have no aggregation relationship with any reference signal resource; or some reference signal resources have an aggregation relationship with corresponding reference signal resources in one reference signal resource set, and some reference signal resources have an aggregation relationship with corresponding reference signal resources in another reference signal resource set.

Exemplarily, the link attributes corresponding to all PRS resources in a PRS resource set are different, meaning that some PRS resources have a link relationship with their corresponding PRS resources, some PRS resources have no link relationship with any PRS resource; or some PRS resources have a link relationship with corresponding PRS resources in one PRS resource set, and some PRS resources have a link relationship with corresponding PRS resources in another PRS resource set.

The corresponding PRS resource of a PRS resource can be determined by LMF configuration, for example, the LMF can configure a link ID for a PRS resource or a PRS resource set, and those with the same ID can be aggregated.

Exemplarily, the link attributes corresponding to all SRS resources in an SRS resource set are different, meaning that some SRS resources have a link relationship with their corresponding SRS resources, some SRS resources have no link relationship with any SRS resource; or some SRS resources have a link relationship with corresponding SRS resources in one SRS resource set, and some SRS resources have a link relationship with corresponding SRS resources in another SRS resource set.

The corresponding SRS resource of an SRS resource can be determined by base station configuration, for example, the base station can configure a link ID for an SRS resource or an SRS resource set, and those with the same ID can be aggregated.

It can be understood that the aggregation (or link) attribute is the aggregation (or link) relationship with other reference signal resource sets or reference signal resources. The different aggregation attributes of reference signal resources in reference signal resource set #1 mean that, for example, reference signal resource #1 of reference signal resource set #1 has an aggregation relationship with reference signal resource #1 of reference signal resource set #2 and can be aggregated; while reference signal resource #2 of reference signal resource set # I has no aggregation relationship with any other reference signal resource, or reference signal resource #2 of reference signal resource set #1 has an aggregation relationship with reference signal resource #2 of reference signal resource set #3. Therefore, this needs to be configured for each reference signal resource. It is not that reference signal resources with the same aggregation attribute can be aggregated.

In some embodiments, the configuration information indicates aggregation attributes corresponding to multiple TRPs, where the aggregation attributes corresponding to the multiple TRPs are all the same, or the aggregation attributes corresponding to the multiple TRPs are partially or entirely different.

In the embodiments of the present disclosure, the configuration information indicates aggregation attributes corresponding to multiple TRPs.

The configuration information indicates that the aggregation attributes corresponding to the multiple TRPs are all the same. In this case, the configuration information indicates that all TRPs of the network-side device transmit PRS on the same multiple CCs or multiple PFLs, or transmit SRS on the same multiple CCs or multiple PFLs.

The configuration information indicates that the aggregation attributes corresponding to the multiple TRPs are partially or entirely different. In this case, the configuration information indicates that some or all TRPs of the network-side device respectively transmit PRS on different multiple CCs or multiple PFLs, or respectively transmit SRS on different multiple CCs or multiple PFLs.

Exemplarily, the configuration information indicates that the aggregation (link) attributes corresponding to all TRPs are the same, meaning that all TRPs transmit PRS based on the same multiple CCs, or transmit SRS based on the same multiple CCs, or transmit PRS based on the same multiple PFLs, or transmit SRS based on the same multiple PFLs.

Exemplarily, the configuration information indicates that the link attributes corresponding to all TRPs are partially or entirely different, meaning that some TRPs transmit PRS based on these multiple CCs, or transmit SRS based on these multiple CCs, or transmit PRS based on these multiple PFLs, or transmit SRS based on these multiple PFLs; some TRPs transmit PRS based on other multiple CCs, or transmit SRS based on other multiple CCs, or transmit PRS based on other multiple PFLs, or transmit SRS based on other multiple PFLs; or some TRPs transmit PRS based on a certain CC, or transmit SRS based on a certain CC, or transmit PRS based on a certain PFL, or transmit SRS based on a certain PFL.

In some embodiments, for the indication method of the configuration information, within the parameters of each TRP, if the TRP supports aggregation, an aggregation identifier corresponding to each TRP, or a TRP group identifier, or a CC group identifier, or a PFL group identifier is provided; otherwise, this field is empty, or is an aggregation identifier or group identifier that does not support aggregation by default.

In the embodiments of the present disclosure, parameters for each TRP include the following:

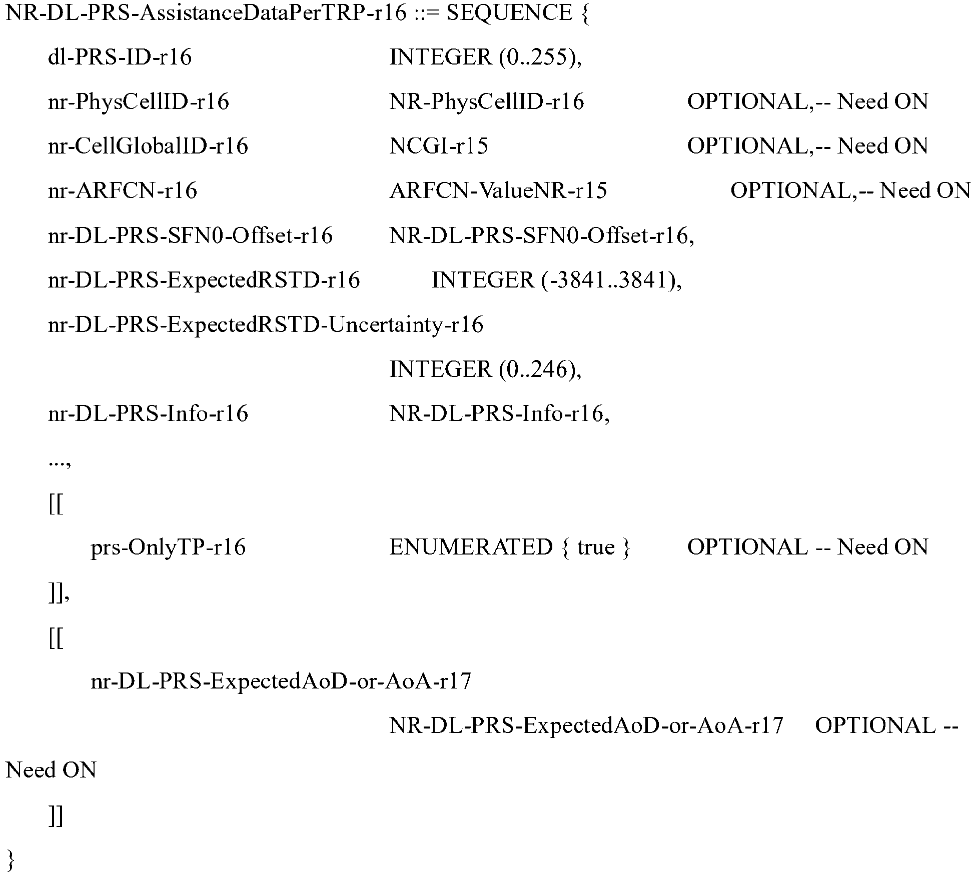

In some embodiments, the configuration information indicates multiple reference signal configurations, where each reference signal configuration corresponds to an identifier, and each reference signal configuration includes parameter information of the reference signal on at least one CC or at least one PFL.

In the embodiments of the present disclosure, the configuration information indicates multiple reference signal configurations, where each reference signal configuration corresponds to an identifier, and each reference signal configuration includes parameter information of the reference signal on at least one CC or at least one PFL.

Exemplarily, the configuration information can configure multiple reference signal configuration IDs, and at least one CC/at least one PFL corresponding to each ID (i.e., some IDs can correspond to one CC/one PFL, and some can correspond to multiple CCs/multiple PFLs).

It should be noted that relevant descriptions of the reference signal can be referred to the relevant descriptions in the foregoing embodiments, which are not repeated here.

It should be noted that, in the embodiments of the present disclosure, S81 can be implemented alone or in combination with any other step in the embodiments of the present disclosure, such as in combination with S61 and/or S71 of the embodiments of the present disclosure, which is not limited in the embodiments of the present disclosure.

In this embodiment or mode, in case of no conflict, the steps can be independent, arbitrarily combined, or exchanged in order, optional modes or examples can be arbitrarily combined, and can be arbitrarily combined with other embodiments or modes.

By implementing the embodiments of the present disclosure, the network-side device sends configuration information to the terminal, where the configuration information includes parameter information of the reference signal, the parameter information includes a frequency-domain resource corresponding to the reference signal, and the frequency-domain resource includes at least one CC or at least one PFL. Thereby, it is possible to implement the configuration for the network-side device to transmit the reference signal based on at least one CC or at least one PFL for the terminal under carrier aggregation, provide a method for configuring the transmission of the reference signal under carrier aggregation, and improve the positioning accuracy of positioning reference signal transmission based on carrier aggregation.

Please refer to FIG. 9, which is a flowchart of yet another method for configuring a reference signal provided by an embodiment of the present disclosure. As shown in FIG. 9, the method is performed by a network-side device and can include, but is not limited to, the following steps:
S91: sending configuration information to a terminal, where the configuration information indicates multiple reference signal configurations, where each reference signal configuration corresponds to an identifier, and each reference signal configuration includes parameter information of the reference signal on at least one CC or at least one PFL.

In an embodiment, where the network-side device is a base station, sending configuration information to the terminal, where the configuration information can reuse existing signaling or messages, for example, at least one of: radio resource control (RRC) signaling, MAC CE, downlink control information (DCI), or new signaling or messages can also be used, which is not specifically limited in the embodiments of the present disclosure.

In an embodiment, where the network-side device is an LMF, sending configuration information to the terminal, where the configuration information sent by the LMF can be received using the LPP protocol.

In the embodiments of the present disclosure, the network-side device sends configuration information to the terminal, which can pre-configure multiple reference signal configurations for the terminal.

Each reference signal configuration corresponds to an identifier, and each reference signal configuration includes parameter information of the reference signal on at least one CC or at least one PFL.

In some embodiments, the configuration information includes at least one of:
first configuration information of the reference signal on one CC;
second configuration information of the reference signal on one PFL;
third configuration information of the reference signal on multiple CCs;
fourth configuration information of the reference signal on multiple PFLs.

In the embodiments of the present disclosure, the configuration information can include first configuration information of the reference signal on one CC.

In the embodiments of the present disclosure, the configuration information can include second configuration information of the reference signal on one PFL.

In the embodiments of the present disclosure, the configuration information can include third configuration information of the reference signal on multiple CCs.

In the embodiments of the present disclosure, the configuration information can include fourth configuration information of the reference signal on multiple PFLs.

It should be noted that the foregoing embodiments are not exhaustive, but are only illustrative of some embodiments, and the foregoing embodiments can be implemented alone or in combination, which is not specifically limited in the embodiments of the present disclosure.

In the embodiments of the present disclosure, one piece of configuration information corresponding to the parameter information of the reference signal can include at least one of: PRS based on a single CC, SRS based on a single CC, PRS based on a single PFL, SRS based on a single PFL, PRS based on multiple CCs, SRS based on multiple CCs, PRS based on multiple PFLs, and SRS based on multiple PFLs.

Exemplarily, the configuration information can configure identifiers (IDs) corresponding to multiple reference signal configurations, and at least one CC/at least one PFL corresponding to each ID (i.e., some IDs can correspond to one CC/one PFL, and some can correspond to multiple CCs/multiple PFLs).

It should be noted that relevant descriptions of the reference signal can be referred to the relevant descriptions in the foregoing embodiments, which are not repeated here.

S92: receiving a request message sent by the terminal, where the request message indicates a target identifier, and the target identifier is an identifier corresponding to a target reference signal configuration selected by the terminal from multiple reference signal configurations configured by the network-side device.

In an embodiment, where the network-side device is a base station, receiving a request message sent by the terminal, where the request message can reuse existing signaling or messages, or new signaling or messages can also be used, which is not specifically limited in the embodiments of the present disclosure.

Exemplarily, the request message can be a random access request message, or a scheduling request message, or a MAC CE, etc.

In an embodiment, where the network-side device is an LMF, receiving a request message sent by the terminal, where the request message sent by the terminal can be received using the LPP protocol.

In some embodiments, the request message is at least one of:
a first request message including a single CC;
a second request message including a single PFL;
a third request message including multiple CCs;
a fourth request message including multiple PFLs.

In the embodiments of the present disclosure, the request message can be a first request message including a single CC.

In the embodiments of the present disclosure, the request message can be a second request message including a single PFL.

In the embodiments of the present disclosure, the request message can be a third request message including multiple CCs.

In the embodiments of the present disclosure, the request message can be a fourth request message including multiple PFLs.

It should be noted that the foregoing embodiments are not exhaustive, but are only illustrative of some embodiments, and the foregoing embodiments can be implemented alone or in combination, which is not specifically limited in the embodiments of the present disclosure.

In the embodiments of the present disclosure, the request message, i.e., one request, can include at least one of: an on-demand PRS request based on a single CC, an on-demand PRS request based on a single PFL, an on-demand PRS request based on multiple CCs, and an on-demand PRS request based on multiple PFLs.

In the embodiments of the present disclosure, the request message indicates a target identifier, where the target identifier is an identifier corresponding to a target reference signal configuration selected by the terminal from multiple reference signal configurations configured by the network-side device, and different reference signal configurations correspond to different identifiers.

Exemplarily, the request message of the terminal can include an identifier (ID) corresponding to the reference signal (e.g., on-demand PRS/PRS/SRS), where the ID corresponding to the on-demand PRS can be dl-prs-configuration-id, the reference signal configuration corresponding to the ID is configured by the LMF, and the terminal only needs to provide the target identifier (i.e., the ID value corresponding to one of the reference signal configurations) when making a request.
a) In this case, it is equivalent to the LMF providing multiple reference signal configurations, each configuration corresponding to an ID.
b) The reference signal configuration corresponding to the ID value can be transmission based on a single CC/single PFL, or aggregated transmission based on multiple CCs/multiple PFLs.

It should be noted that, in the embodiments of the present disclosure, S91 and S92 can be implemented alone or in combination with any other step in the embodiments of the present disclosure, such as in combination with S61 and/or S71 and/or S81 of the embodiments of the present disclosure, which is not limited in the embodiments of the present disclosure.

In this embodiment or mode, in case of no conflict, the steps can be independent, arbitrarily combined, or exchanged in order, optional modes or examples can be arbitrarily combined, and can be arbitrarily combined with other embodiments or modes.

By implementing the embodiments of the present disclosure, the network-side device sends configuration information to the terminal, where the configuration information indicates multiple reference signal configurations, where each reference signal configuration corresponds to an identifier, and each reference signal configuration includes parameter information of the reference signal on at least one CC or at least one PFL, and receives a request message sent by the terminal, where the request message indicates a target identifier, and the target identifier is an identifier corresponding to a target reference signal configuration selected by the terminal from multiple reference signal configurations configured by the network-side device. Thereby, it is possible to implement the request and configuration for the terminal to transmit the reference signal based on at least one CC or at least one PFL under carrier aggregation, provide a method for requesting the transmission of the reference signal and receiving the configuration of the reference signal under carrier aggregation, and improve the positioning accuracy of positioning reference signal transmission based on carrier aggregation.

In an exemplary embodiment, in Rel-18, in order to improve the accuracy of time-based positioning methods, a bandwidth aggregation method is considered for transmitting PRS/SRS.

In related art, PRS/SRS used for positioning are transmitted based on a single CC/PFL (positioning frequency layer, hereinafter referred to as CC for illustration), so only a single CC needs to be configured. How to configure PRS/SRS based on multiple CCs/PFLs is a problem that needs to be solved.

The embodiments of the present disclosure propose a request and configuration method for PRS/SRS transmission based on multiple CCs/PFLs.

In some embodiments, a terminal transmits parameter information of a reference signal, where the reference signal includes a reference signal for positioning purposes, and a frequency-domain resource corresponding to the reference signal includes at least one CC/PFL.

Optionally, the reference signal includes PRS and/or SRS.

Optionally, the PRS includes on-demand PRS, where the on-demand PRS is requested by the terminal and is only transmitted for a period of time, which is indicated by the following two IEs. The PRS also includes non-on-demand PRS. (PRS requests and configuration information are transmitted between the UE and the LMF using LPP protocol signaling).
1. dl-prs-start-time specifies the desired start time for the requested downlink (DL)-PRS. It indicates the time in seconds from the time the IE NR-On-Demand-DL-PRS-Request was received.
2. dl-prs-duration specifies the desired duration of the requested DL-PRS. The desired duration is the sum of the seconds, minutes, hours fields. If this field is included, at least one of the seconds, minutes, hours fields shall be present.

Optionally, the SRS includes periodic, semi-persistent, and aperiodic SRS. (SRS requests and configuration are transmitted between the UE and the gNB).

In some embodiments, the terminal transmitting reference signal parameter information includes the terminal sending request information (the request message in the foregoing embodiments, the same below), where the request information includes reference signal information. a) The reference signal information included in the request information is reference signal information recommended by the terminal.

In some embodiments, the request information, i.e., one request, can include at least one of: an on-demand PRS request based on a single CC/PFL, and an on-demand PRS request based on multiple CCs/PFLs.

In some embodiments, for an on-demand PRS request based on multiple CCs/PFLs:
a) Indicating which multiple CCs/PFLs the terminal itself prefers to support for linking, to achieve bandwidth aggregation
   i. For example, configuring a link ID for each CC/PFL, where those corresponding to the same link ID need to be aggregated. In this case, the terminal can simultaneously configure one or more sets of CC combinations, and the CCs within different combinations need to be aggregated;
   ii. For example, configuring a CC group IE that includes multiple CC IDs, then the CCs within the group need to be aggregated; this case can also allow the terminal to simultaneously configure one or more CC groups.

In some embodiments, the request indicates that the link attributes corresponding to all PRS resources in a PRS resource set are the same or different.

Optionally, the link attributes corresponding to all PRS resources in a PRS resource set are the same, meaning all PRS resources have a link relationship with corresponding PRS resources in another same PRS resource set; or all PRS resources have no link relationship with any PRS resource.

Optionally, the link attributes corresponding to all PRS resources in a PRS resource set are different,
1. meaning some PRS resources have a link relationship with their corresponding PRS resources, and some PRS resources have no link relationship with any PRS resource;
2. or some PRS resources have a link relationship with corresponding PRS resources in one PRS resource set, and some PRS resources have a link relationship with corresponding PRS resources in another PRS resource set.

In some embodiments, the request indicates that the link attributes corresponding to all TRPs are the same or different
a) Indicating that the link attributes corresponding to all TRPs are the same, meaning all TRPs transmit PRS based on the same multiple CCs/PFLs
b) Indicating that the link attributes corresponding to all TRPs are different, meaning some TRPs transmit PRS based on these multiple CCs/PFLs, some TRPs transmit PRS based on other multiple CCs/PFLs, or some TRPs transmit PRS based on a certain CC/PFL
   i. Indication method: within the per-TRP parameters, if the TRP supports aggregation, provide the link ID or CC group ID corresponding to each TRP; otherwise, this field is empty, or is a link ID value or group ID value that does not support aggregation by default.
   ii. Per-TRP parameters include the following:

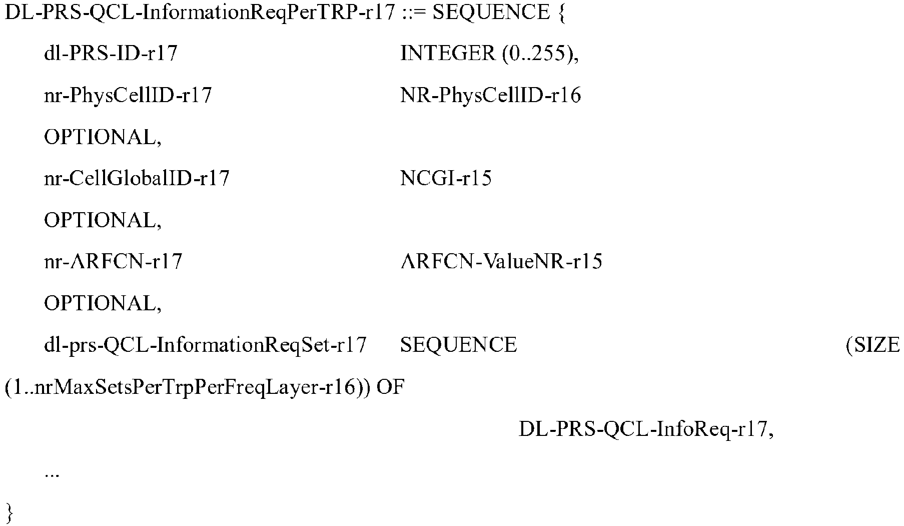

In some embodiments, the terminal request can also include the dl-prs-configuration-id corresponding to the on-demand PRS, where the configuration corresponding to the ID is configured by the LMF, and the terminal only needs to provide the corresponding ID value when requesting.
a) In this case, it is equivalent to the LMF providing multiple configurations, each configuration corresponding to an ID, and this configuration will be described later in the terminal receiving reference signal information.
b) The PRS configuration corresponding to the ID value can be transmission based on a single CC, or aggregated transmission based on multiple CCs.

In some embodiments, the terminal transmitting reference signal parameter information includes the terminal receiving reference signal parameter information.

In some embodiments, one piece of configuration information corresponding to the reference signal parameter information includes at least one of: PRS/SRS based on a single CC/PFL, and PRS/SRS based on multiple CCs/PFLs;

In some embodiments, for PRS/SRS based on multiple CCs/PFLs:
a) The configuration information indicates which multiple CCs/PFLs are supported for linking to achieve bandwidth aggregation
   i. For example, configuring a link ID for each CC/PFL, where those corresponding to the same link ID need to be aggregated. In this case, one or more sets of CC combinations can be configured simultaneously, and the CCs within different combinations need to be aggregated;
   ii. For example, configuring a CC group IE that includes multiple CC IDs, then the CCs within the group need to be aggregated; this case can also allow the simultaneous configuration of one or more CC groups.

In some embodiments, the configuration information indicates that the link attributes corresponding to all PRS resources in a PRS resource set are the same or different

Optionally, the link attributes corresponding to all PRS resources in a PRS resource set are the same, meaning all PRS resources have a link relationship with corresponding PRS resources in another same PRS resource set; or all PRS resources have no link relationship with any PRS resource.

Optionally, the link attributes corresponding to all PRS resources in a PRS resource set are different,
1. meaning some PRS resources have a link relationship with their corresponding PRS resources, and some PRS resources have no link relationship with any PRS resource;
2. or some PRS resources have a link relationship with corresponding PRS resources in one PRS resource set, and some PRS resources have a link relationship with corresponding PRS resources in another PRS resource set.

In some embodiments, the configuration information indicates that the link attributes corresponding to all TRPs are the same or different
a) Indicating that the link attributes corresponding to all TRPs are the same, meaning all TRPs transmit PRS based on the same multiple CCs/PFLs
b) Indicating that the link attributes corresponding to all TRPs are different, meaning some TRPs transmit PRS based on these multiple CCs/PFLs, some TRPs transmit PRS based on other multiple CCs/PFLs, or some TRPs transmit PRS based on a certain CC/PFL
   i. Indication method: within the per-TRP parameters, if the TRP supports aggregation, provide the link ID or CC group ID corresponding to each TRP; otherwise, this field is empty, or is a link ID value or group ID value that does not support aggregation by default.
   ii. Per-TRP parameters include the following:

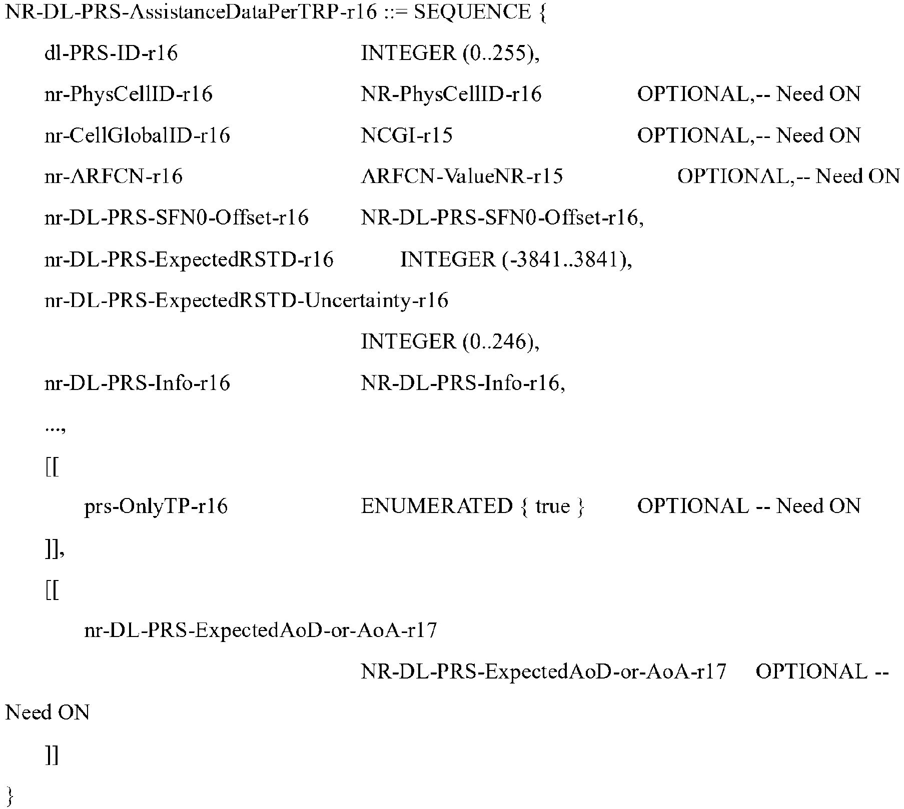

In some embodiments, the configuration information configures multiple reference signal configuration IDs, and at least one CC/PFL corresponding to each ID (i.e., some IDs can correspond to one CC, and some can correspond to multiple CCs).

The embodiments of the present disclosure propose a method for requesting and configuring PRS/SRS transmission under carrier aggregation, which can improve the positioning accuracy of positioning reference signal transmission based on carrier aggregation.

In the foregoing embodiments provided by the present disclosure, the methods provided by the embodiments of the present disclosure are introduced from the perspectives of the terminal and the network-side device, respectively.

Please refer to FIG. 10, which is a schematic structural diagram of a communication apparatus 1 provided by an embodiment of the present disclosure. The communication apparatus 1 shown in FIG. 10 may include a transceiver module 11 and a processing module. The transceiver module may include a sending module and/or a receiving module, where the sending module is used to implement a sending function, the receiving module is used to implement a receiving function, and the transceiver module may implement the sending function and/or the receiving function.

The communication apparatus 1 may be a terminal, an apparatus in a terminal, or an apparatus that can be used in conjunction with a terminal. Alternatively, the communication apparatus 1 may be a network-side device, an apparatus in a network-side device, or an apparatus that can be used in conjunction with a network-side device.

The communication apparatus 1 is configured on the terminal side:

The apparatus includes: a transceiver module 11.

The transceiver module 11 is configured to send and/or receive parameter information of a reference signal, where the parameter information includes a frequency-domain resource corresponding to the reference signal, and the frequency-domain resource includes at least one component carrier CC or at least one positioning frequency layer PFL.

In some embodiments, the reference signal includes at least one of:
a positioning reference signal PRS;
a sounding reference signal SRS.

In some embodiments, the transceiver module 11 is further configured to send a request message to a network-side device, where the request message includes parameter information of the reference signal.

In some embodiments, the request message is at least one of:
a first request message including a single CC;
a second request message including a single PFL;
a third request message including multiple CCs;
a fourth request message including multiple PFLs.

In some embodiments, the third request message indicates multiple CCs supported by the terminal for carrier aggregation; or the fourth request message indicates multiple PFLs supported by the terminal for carrier aggregation.

In some embodiments, the request message indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In some embodiments, the request message indicates aggregation attributes corresponding to multiple transmission reception points TRPs, where the aggregation attributes corresponding to the multiple TRPs are all the same, or the aggregation attributes corresponding to the multiple TRPs are partially or entirely different.

In some embodiments, the request message indicates a target identifier, where the target identifier is an identifier corresponding to a target reference signal configuration selected by the terminal from multiple reference signal configurations configured by the network-side device.

In some embodiments, the transceiver module 11 is further configured to receive configuration information sent by a network-side device, where the configuration information includes parameter information of the reference signal.

In some embodiments, the configuration information includes at least one of:
first configuration information of the reference signal on one CC;
second configuration information of the reference signal on one PFL;
third configuration information of the reference signal on multiple CCs;
fourth configuration information of the reference signal on multiple PFLs.

In some embodiments, the third configuration information indicates multiple CCs supporting carrier aggregation; or the fourth configuration information indicates multiple PFLs supporting carrier aggregation.

In some embodiments, the configuration information indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In some embodiments, the configuration information indicates aggregation attributes corresponding to multiple TRPs, where the aggregation attributes corresponding to the multiple TRPs are all the same, or the aggregation attributes corresponding to the multiple TRPs are partially or entirely different.

In some embodiments, the configuration information indicates multiple reference signal configurations, where each reference signal configuration corresponds to an identifier, and each reference signal configuration includes parameter information of the reference signal on at least one CC or at least one PFL.

The communication apparatus 1 is configured on the network-side device side:

The apparatus includes: a transceiver module 11.

The transceiver module 11 is configured to receive a request message sent by a terminal; and/or send configuration information to the terminal;
where the request message and/or the configuration information include parameter information of a reference signal, the parameter information includes a frequency-domain resource corresponding to the reference signal, and the frequency-domain resource includes at least one CC or at least one PFL.

In some embodiments, the reference signal includes at least one of:
PRS;
SRS.

In some embodiments, the request message is at least one of:
a first request message including a single CC;
a second request message including a single PFL;
a third request message including multiple CCs;
a fourth request message including multiple PFLs.

In some embodiments, the third request message indicates multiple CCs supported by the terminal for carrier aggregation; or the fourth request message indicates multiple PFLs supported by the terminal for carrier aggregation.

In some embodiments, the request message indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In some embodiments, the request message indicates aggregation attributes corresponding to multiple TRPs, where the aggregation attributes corresponding to the multiple TRPs are all the same, or the aggregation attributes corresponding to the multiple TRPs are partially or entirely different.

In some embodiments, the request message indicates a target identifier, where the target identifier is an identifier corresponding to a target reference signal configuration selected by the terminal from multiple reference signal configurations configured by the network-side device.

In some embodiments, the configuration information includes at least one of:
first configuration information of the reference signal on one CC;
second configuration information of the reference signal on one PFL;
third configuration information of the reference signal on multiple CCs;
fourth configuration information of the reference signal on multiple PFLs.

In some embodiments, the third configuration information indicates multiple CCs supporting carrier aggregation; or the fourth configuration information indicates multiple PFLs supporting carrier aggregation.

In some embodiments, the configuration information indicates aggregation attributes corresponding to multiple reference signal resources in a reference signal resource set, where the aggregation attributes corresponding to the multiple reference signal resources are all the same, or the aggregation attributes corresponding to the multiple reference signal resources are partially or entirely different.

In some embodiments, the configuration information indicates aggregation attributes corresponding to multiple transmission reception points TRPs, where the aggregation attributes corresponding to the multiple TRPs are all the same, or the aggregation attributes corresponding to the multiple TRPs are partially or entirely different.

In some embodiments, the configuration information indicates multiple reference signal configurations, where each reference signal configuration corresponds to an identifier, and each reference signal configuration includes parameter information of the reference signal on at least one CC or at least one PFL.

Regarding the communication apparatus 1 in the foregoing embodiments, the specific manners in which the various modules perform operations have been described in detail in the embodiments related to the method, and will not be elaborated here.

The communication apparatus 1 provided in the foregoing embodiments of the present disclosure achieves the same or similar beneficial effects as the method for configuring a reference signal provided in some of the foregoing embodiments, which will not be repeated here.

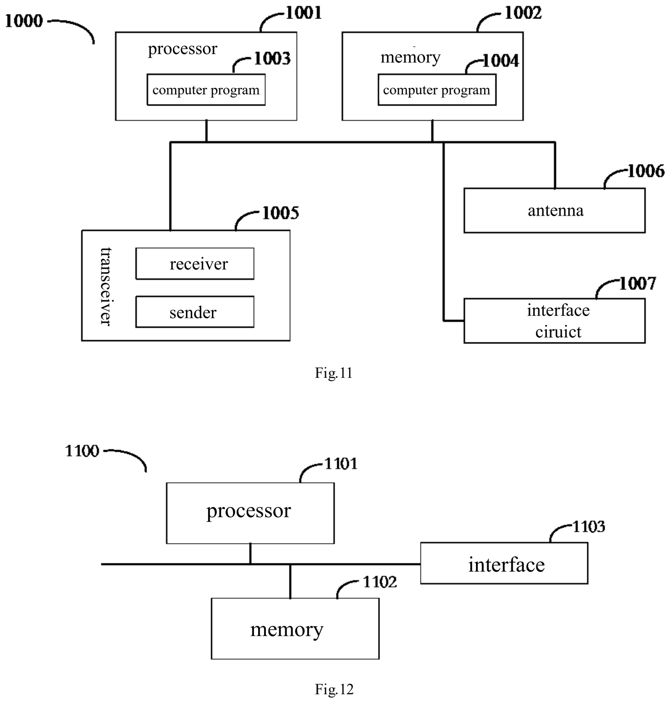

Please refer to FIG. 11, which is a schematic structural diagram of another communication apparatus 1000 provided by an embodiment of the present disclosure. The communication apparatus 1000 may be a terminal, a network-side device, a chip, a chip system, or a processor that supports a terminal to implement the foregoing method, or a chip, a chip system, or a processor that supports a network-side device to implement the foregoing method. The communication apparatus 1000 can be used to implement the method described in the foregoing method embodiments, and specific reference can be made to the description in the foregoing method embodiments.

The communication apparatus 1000 may include one or more processors 1001. The processor 1001 may be a general-purpose processor or a special-purpose processor, etc. For example, it may be a baseband processor or a central processing unit. The baseband processor may be used to process communication protocols and communication data, and the central processing unit may be used to control the communication apparatus (e.g., a network-side device, a baseband chip, a terminal, a terminal chip, a DU, or a CU, etc.), execute computer programs, and process data of the computer programs.

Optionally, the communication apparatus 1000 may further include one or more memories 1002, on which a computer program 1004 may be stored. The memory 1002 executes the computer program 1004 to cause the communication apparatus 1000 to perform the method described in the foregoing method embodiments. Optionally, data may also be stored in the memory 1002. The communication apparatus 1000 and the memory 1002 may be set separately or integrated together.

Optionally, the communication apparatus 1000 may further include a transceiver 1005 and an antenna 1006. The transceiver 1005 may be referred to as a transceiver unit, a transceiver, or a transceiver circuit, etc., and is used to implement a transceiver function. The transceiver 1005 may include a receiver and a transmitter. The receiver may be referred to as a receiver or a receiving circuit, etc., and is used to implement a receiving function. The transmitter may be referred to as a transmitter or a transmitting circuit, etc., and is used to implement a transmitting function.

Optionally, the communication apparatus 1000 may further include one or more interface circuits 1007. The interface circuit 1007 is used to receive code instructions and transmit them to the processor 1001. The processor 1001 runs the code instructions to cause the communication apparatus 1000 to perform the method described in the foregoing method embodiments.

The communication apparatus 1000 is a terminal: the transceiver 1005 is used to perform S21 in FIG. 2; S31 in FIG. 3; S41 in FIG. 4; S51 and S52 in FIG. 5.

The communication apparatus 1000 is a network-side device: the transceiver 1005 is used to perform S61 in FIG. 6; S71 in FIG. 7; S81 in FIG. 8; S91 and S92 in FIG. 9.

In one implementation, the processor 1001 may include a transceiver for implementing receiving and transmitting functions. For example, the transceiver may be a transceiver circuit, an interface, or an interface circuit. The transceiver circuits, interfaces, or interface circuits for implementing receiving and transmitting functions may be separate or integrated. The aforementioned transceiver circuits, interfaces, or interface circuits may be used for reading/writing code/data, or may be used for transmitting or transferring signals.

In one implementation, the processor 1001 may store a computer program 1003. The computer program 1003 runs on the processor 1001 to cause the communication apparatus 1000 to perform the method described in the foregoing method embodiments. The computer program 1003 may be solidified in the processor 1001. In this case, the processor 1001 may be implemented by hardware.

In one implementation, the communication apparatus 1000 may include a circuit, and the circuit may implement the function of sending, receiving, or communicating in the foregoing method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and transceiver may also be manufactured using various IC process technologies, such as complementary metal oxide semiconductor (CMOS), N-type metal oxide semiconductor (NMOS), P-type metal oxide semiconductor (PMOS), bipolar junction transistor (BJT), bipolar CMOS (BiCMOS), silicon germanium (SiGe), gallium arsenide (GaAs), etc.

The communication apparatus in the above embodiment descriptions may be a terminal or a network-side device, but the scope of the communication apparatus described in the present disclosure is not limited thereto, and the structure of the communication apparatus may not be limited by FIG. 11. The communication apparatus may be an independent device or may be part of a larger device. For example, the communication apparatus may be:
(1) an independent integrated circuit IC, or chip, or chip system or subsystem;
(2) a set of one or more ICs, optionally, the set of ICs may also include storage components for storing data and computer programs;
(3) an ASIC, such as a modem (Modem);
(4) a module that can be embedded in other devices;
(5) a receiver, terminal, smart terminal, cellular phone, wireless device, handset, mobile unit, vehicle-mounted device, network-side device, cloud device, artificial intelligence device, etc.;
(6) others, etc.

For the case where the communication apparatus may be a chip or a chip system, please refer to FIG. 12, which is a structural diagram of a chip provided by an embodiment of the present disclosure.

The chip 1100 includes a processor 1101 and an interface 1103. The number of processors 1101 may be one or more, and the number of interfaces 1103 may be multiple.

For the case where the chip is used to implement the function of the terminal in the embodiments of the present disclosure:

The interface 1103 is configured to receive code instructions and transmit them to the processor.

The processor 1101 is configured to run the code instructions to perform the method for configuring a reference signal as described in some of the foregoing embodiments.

For the case where the chip is used to implement the function of the network-side device in the embodiments of the present disclosure:

The interface 1103 is configured to receive code instructions and transmit them to the processor.

The processor 1101 is configured to run the code instructions to perform the method for configuring a reference signal as described in some of the foregoing embodiments.

Optionally, the chip 1100 further includes a memory 1102, and the memory 1102 is used to store necessary computer programs and data.

Those skilled in the art may also understand that the various illustrative logical blocks and steps listed in the embodiments of the present disclosure may be implemented by electronic hardware, computer software, or a combination of both. Whether such functions are implemented by hardware or software depends on the specific application and design constraints of the overall system. Those skilled in the art may use various methods to implement the described functions for each specific application, but such implementation should not be interpreted as going beyond the scope of the embodiments of the present disclosure.

The embodiments of the present disclosure also provide a system for configuring a reference signal, where the system includes the communication apparatus as a terminal and the communication apparatus as a network-side device in the foregoing FIG. 10 embodiment, or the system includes the communication apparatus as a terminal and the communication apparatus as a network-side device in the foregoing FIG. 11 embodiment.

The present disclosure also provides a readable storage medium having instructions stored thereon, which when executed by a computer, implement the functions of any of the foregoing method embodiments.

The present disclosure also provides a computer program product, where when executed by a computer, the computer program product implements the functions of any of the above method embodiments.

In the above embodiments, the implementation may be achieved entirely or partially through software, hardware, firmware, or any combination thereof. When software is used for implementation, it may be achieved entirely or partially in the form of a computer program product. The computer program product includes one or more computer programs. When the computer program(s) is/are loaded and executed on a computer, the processes or functions described in the embodiments of the present disclosure are generated entirely or partially. The computer may be a general-purpose computer, a specialized computer, a computer network, or other programmable devices. The computer program may be stored in a computer-readable storage medium or transmitted from one computer-readable storage medium to another computer-readable storage medium. For example, the computer program may be transmitted from a website, computer, server, or data center to another website, computer, server, or data center via wired means (e.g., coaxial cable, optical fiber, digital subscriber line (DSL)) or wireless means (e.g., infrared, wireless, microwave, etc.). The computer-readable storage medium may be any available medium that can be accessed by a computer or a data storage device, such as a server or data center, that integrates one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

Those of ordinary skill in the art may understand that the various numerical designations such as first and second involved in the present disclosure are merely for distinguishing descriptions for convenience and are not intended to limit the scope of the embodiments of the present disclosure, nor do they indicate any order of sequence.

The term "at least one" in the present disclosure may also be described as "one or more," and "multiple" may refer to two, three, four, or more, which is not limited in the present disclosure. In the embodiments of the present disclosure, for a certain technical feature, terms such as "first," "second," "third," "A," "B," "C," and "D" are used to distinguish the technical features within that certain technical feature, and there is no sequential or size order among the technical features described by "first," "second," "third," "A," "B," "C," and "D."

Depending on the context, the word "if" or "in a case that" as used herein may be interpreted as "when," "while," or "in response to determining."

The correspondences shown in the tables in the present disclosure may be configured or predefined. The values of the information in the tables are merely examples and may be configured as other values, which is not limited in the present disclosure. When configuring the correspondences between the configuration information and the various parameters, it is not necessarily required to configure all the correspondences shown in the tables. For example, in the tables of the present disclosure, the correspondences shown in certain rows may also not be configured. Furthermore, appropriate adjustments may be made based on the above tables, such as splitting, merging, etc. The names of the parameters shown in the headings of the above tables may also be replaced with other names understandable by communication devices, and the values or representations of the parameters may also be other values or representations understandable by communication devices. When implementing the above tables, other data structures may also be used, such as arrays, queues, containers, stacks, linear lists, pointers, linked lists, trees, graphs, structs, classes, heaps, hash tables, or hash maps.

The term "predefined" in the present disclosure may be understood as defined, pre-defined, stored, pre-stored, pre-negotiated, pre-configured, solidified, or pre-burned.

Those of ordinary skill in the art may recognize that the units and algorithm steps of the examples described in combination with the embodiments disclosed herein can be implemented in electronic hardware, or a combination of computer software and electronic hardware. Whether these functions are executed by hardware or software depends on the specific application and design constraints of the technical solution. Professionals may use different methods for each specific application to implement the described functions, but such implementation should not be considered beyond the scope of the present disclosure.

Those skilled in the art may clearly understand that, for the convenience and conciseness of description, the specific working processes of the systems, devices, and units described above may refer to the corresponding processes in the foregoing method embodiments, and are not repeated here.

The above descriptions are merely specific implementations of the present disclosure, but the scope of the present disclosure is not limited thereto. Any person skilled in the art may easily conceive changes or substitutions within the technical scope disclosed in the present disclosure, which shall fall within the scope of the present disclosure. Therefore, the scope of the present disclosure shall be subject to the scope of the claims.

## Claims

1. A method for configuring a reference signal, performed by a terminal, comprising:
sending and/or receiving parameter information of a reference signal, wherein the parameter information comprises a frequency-domain resource corresponding to the reference signal, and the frequency-domain resource comprises at least one component carrier (CC) or at least one positioning frequency layer (PFL).

2. The method according to claim 1, wherein the reference signal comprises at least one of:
a positioning reference signal (PRS); or
a sounding reference signal (SRS).

3. The method according to claim 1 or 2, wherein sending the parameter information of the reference signal comprises:
sending a request message to a network-side device, wherein the request message comprises the parameter information of the reference signal.

4. The method according to claim 3, wherein the request message comprises at least one of:
a first request message comprising a single CC;
a second request message comprising a single PFL;
a third request message comprising multiple CCs; or
a fourth request message comprising multiple PFLs.

5. The method according to claim 4, wherein the third request message indicates multiple CCs supported by the terminal for a carrier aggregation; or
the fourth request message indicates multiple PFLs supported by the terminal for a carrier aggregation.

6. The method according to any one of claims 3 to 5, wherein the request message indicates aggregation attributes corresponding to multiple reference signal resources in a reference signal resource set, wherein the aggregation attributes corresponding to the multiple reference signal resources are the same, or the aggregation attributes corresponding to the multiple reference signal resources are partially or entirely different.

7. The method according to any one of claims 3 to 6, wherein the request message indicates aggregation attributes corresponding to multiple transmission reception points (TRPs), wherein the aggregation attributes corresponding to the multiple TRPs are the same, or the aggregation attributes corresponding to the multiple TRPs are partially or entirely different.

8. The method according to any one of claims 3 to 5, wherein the request message indicates a target identifier, wherein the target identifier is an identifier corresponding to a target reference signal configuration selected by the terminal from multiple reference signal configurations configured by the network-side device.

9. The method according to any one of claims 1 to 8, wherein receiving the parameter information of the reference signal comprises:
receiving configuration information sent by a network-side device, wherein the configuration information comprises the parameter information of the reference signal.

10. The method according to claim 9, wherein the configuration information comprises at least one of:
first configuration information of the reference signal on one CC;
second configuration information of the reference signal on one PFL;
third configuration information of the reference signal on multiple CCs; or
fourth configuration information of the reference signal on multiple PFLs.

11. The method according to claim 10, wherein the third configuration information indicates multiple CCs supporting a carrier aggregation; or
the fourth configuration information indicates multiple PFLs supporting a carrier aggregation.

12. The method according to any one of claims 9 to 11, wherein the configuration information indicates aggregation attributes corresponding to multiple reference signal resources in a reference signal resource set, wherein the aggregation attributes corresponding to the multiple reference signal resources are the same, or the aggregation attributes corresponding to the multiple reference signal resources are partially or entirely different.

13. The method according to any one of claims 9 to 12, wherein the configuration information indicates aggregation attributes corresponding to multiple TRPs, wherein the aggregation attributes corresponding to the multiple TRPs are the same, or the aggregation attributes corresponding to the multiple TRPs are partially or entirely different.

14. The method according to any one of claims 9 to 11, wherein the configuration information indicates multiple reference signal configurations, wherein each of the multiple reference signal configurations corresponds to an identifier, and each of the multiple reference signal configurations comprises the parameter information of the reference signal on at least one CC or at least one PFL.

15. A method for configuring a reference signal, performed by a network-side device, comprising:
receiving a request message sent by a terminal, and/or sending configuration information to the terminal;
wherein the request message and/or the configuration information comprise parameter information of a reference signal, the parameter information comprises a frequency-domain resource corresponding to the reference signal, and the frequency-domain resource comprises at least one component carrier (CC) or at least one positioning frequency layer (PFL).

16. The method according to claim 15, wherein the reference signal comprises at least one of:
a positioning reference signal (PRS); or
a sounding reference signal (SRS).

17. The method according to claim 15 or 16, wherein the request message comprises at least one of:
a first request message comprising a single CC;
a second request message comprising a single PFL;
a third request message comprising multiple CCs; or
a fourth request message comprising multiple PFLs.

18. The method according to claim 17, wherein the third request message indicates multiple CCs supported by the terminal for a carrier aggregation; or
the fourth request message indicates multiple PFLs supported by the terminal for a carrier aggregation.

19. The method according to any one of claims 15 to 18, wherein the request message indicates aggregation attributes corresponding to multiple reference signal resources in a reference signal resource set, wherein the aggregation attributes corresponding to the multiple reference signal resources are the same, or the aggregation attributes corresponding to the multiple reference signal resources are partially or entirely different.

20. The method according to any one of claims 15 to 19, wherein the request message indicates aggregation attributes corresponding to multiple transmission reception points (TRPs), wherein the aggregation attributes corresponding to the multiple TRPs are the same, or the aggregation attributes corresponding to the multiple TRPs are partially or entirely different.

21. The method according to any one of claims 15 to 17, wherein the request message indicates a target identifier, wherein the target identifier is an identifier corresponding to a target reference signal configuration selected by the terminal from multiple reference signal configurations configured by the network-side device.

22. The method according to any one of claims 15 to 21, wherein the configuration information comprises at least one of:
first configuration information of the reference signal on one CC;
second configuration information of the reference signal on one PFL;
third configuration information of the reference signal on multiple CCs; or
fourth configuration information of the reference signal on multiple PFLs.

23. The method according to claim 22, wherein the third configuration information indicates multiple CCs supporting a carrier aggregation; or
the fourth configuration information indicates multiple PFLs supporting a carrier aggregation.

24. The method according to any one of claims 15 to 23, wherein the configuration information indicates aggregation attributes corresponding to multiple reference signal resources in a reference signal resource set, wherein the aggregation attributes corresponding to the multiple reference signal resources are the same, or the aggregation attributes corresponding to the multiple reference signal resources are partially or entirely different.

25. The method according to any one of claims 15 to 24, wherein the configuration information indicates aggregation attributes corresponding to multiple TRPs, wherein the aggregation attributes corresponding to the multiple TRPs are the same, or the aggregation attributes corresponding to the multiple TRPs are partially or entirely different.

26. The method according to any one of claims 15 to 22, wherein the configuration information indicates multiple reference signal configurations, wherein each of the multiple reference signal configurations corresponds to an identifier, and each of the multiple reference signal configurations comprises the parameter information of the reference signal on at least one CC or at least one PFL.

27. A communication apparatus, comprising:
a transceiver module configured to send and/or receive parameter information of a reference signal, wherein the parameter information comprises a frequency-domain resource corresponding to the reference signal, and the frequency-domain resource comprises at least one component carrier (CC) or at least one positioning frequency layer (PFL).

28. A communication apparatus, comprising:
a transceiver module configured to receive a request message sent by a terminal and/or send configuration information to the terminal;
wherein the request message and/or the configuration information comprise parameter information of a reference signal, the parameter information comprises a frequency-domain resource corresponding to the reference signal, and the frequency-domain resource comprises at least one component carrier (CC) or at least one positioning frequency layer (PFL).

29. A communication apparatus, comprising a processor and a memory, wherein the memory stores a computer program, and the processor executes the computer program stored in the memory to cause the apparatus to perform the method according to any one of claims 1 to 14, or the processor executes the computer program stored in the memory to cause the apparatus to perform the method according to any one of claims 15 to 26.

30. A communication apparatus, comprising a processor and an interface circuit;
wherein the interface circuit is configured to receive a code instruction and send the code instruction to the processor;
wherein the processor is configured to run the code instruction to perform the method according to any one of claims 1 to 14, or to run the code instruction to perform the method according to any one of claims 15 to 26.

31. A computer-readable storage medium, having stored therein an instruction that, when executed, causes the method according to any one of claims 1 to 14 to be implemented, or causes the method according to any one of claims 15 to 26 to be implemented.
